# EUROPÄISCHE PATENTSCHRIFT

(11) **EP 1 749 367 B1**
(45) Veröffentlichungstag und Bekanntmachung des Hinweises auf die Patenterteilung: **07.05.2008**
(21) Anmeldenummer: 04766011.3
(22) Anmeldetag: 12.05.2004
(51) Int. Cl.: H04L 12/14, H04L 12/28

(54) **VERFAHREN UND SYSTEM FÜR CONTENT-BASIERTES BILLING IN IP-NETZWERKEN**
METHOD AND DEVICE FOR CONTENT-BASED BILLING IN IP-NETWORKS
PROCEDE ET SYSTEME DE FACTURATION SUR LA BASE DU CONTENU DANS DES RESEAUX IP

(43) Veröffentlichungstag der Anmeldung: 07.02.2007
(73) Patentinhaber: Togewa Holding AG, 3000 Bern 32 (CH)
(72) Erfinder: STADELMANN, Toni, CH-3065 Bolligen (CH); HEUTSCHI, Walter, CH-3303 Jegenstorf (CH); ZBÄREN, Peter, CH-3126 Kaufdorf (CH); PAUL, Hans Ulrich, CH-3032 Hinterkappelen (CH)
(74) Vertreter: Braun, André jr.
(86) Internationale Anmeldenummer: PCT/EP2004/050777
(87) Internationale Veröffentlichungsnummer: WO 2005/117342

(56) Entgegenhaltungen:
- WO-A-02/073934
- WO-A-03/050743
- WO-A-20/04017565
- US-A1- 2003 157 926
- US-B1- 6 553 219

## Beschreibung

Die vorliegende Erfindung betrifft ein Verfahren und ein System für content-basiertes Billing in IP-Netzwerken, wobei ein IP-Node über ein Internet Service Provider (ISP) auf kostenpflichtige Inhalte von einem oder mehreren Content Providern eines Netzwerkes zugreift, und wobei der IP-Node auf einen Request eine auf einer SIM-Karte des IP-Nodes gespeicherte IMSI an ein Control-Gateway-Modul übermittelt und die IMSI des IP-Nodes in einer Datenbank eines SIM-RADIUS-Moduls gespeichert wird. Die Erfindung betrifft insbesondere mobile IP-Nodes bei Roaming in heterogenen Netzwerken.

Weltweit ist die Zahl der Internetbenutzer und damit der dort angebotenen Information im letzten Jahrzehnt exponentiell gestiegen. Obwohl jedoch das Internet weltweit Zugang zu Informationen bietet, hat der Benutzer normalerweise keinen Zugang dazu, bis er nicht an einem bestimmten Netzzugang, wie z.B. im Büro, in der Schule, an der Universität oder zu Hause, angekommen ist. Das wachsende Angebot an IP-fähigen Geräten insbesondere von mobilen Geräten, wie z.B. PDAs, Mobilfunktelefone und Laptops, beginnt unsere Vorstellung vom Internet zu verändern. Ein analoger Übergang von fixen Nodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie WAP, GPRS oder UMTS. Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen. Der Bedarf im privaten wie auch im geschäftlichen Bereich nach weltweitem unabhängigem drahtlosem Zugriff auf LANs (z.B. in Flughäfen, Städten, etc., etc.) mit Laptops, PDAs, etc., ist riesig. Die WLANs, basierend z.B. auf IP, bieten heute jedoch den Service nicht, wie er z.B. mit GSM/GPRS erzeugt wird, der ein freies Roaming der Benutzer erlauben würde. Diese Dienste müssten neben Sicherheitsmechanismen wie im GSM/GPRS ebenfalls Möglichkeiten zur Service Autorisierung und zum Billing, d.h. Verrechnen der beanspruchten Leistung etc., umfassen. Auf der anderen Seite wird ein solcher Dienst auch nicht von bestehenden GSM/GPRS-Betreibern angeboten. Es ist aber nicht nur das Roaming zwischen verschiedenen WLANs wichtig. Durch das grosse Wachstum bei der Informationstechnologie mit WLANs (mit Zugriff auf Internet etc.) und dem ebenfalls grossen Wachstum in der Mobilfunktelefonie ist es sinnvoll, diese beiden Welten zu verknüpft. Erst die Verknüpfung der beiden Welten macht bei wireless LANs ein einfaches und nahtloses Roaming möglich, wie es der Benutzer von der Mobilfunktechnologie gewohnt ist. Somit besteht der Bedarf nach Anbietern, die zwischen unterschiedlichen WLAN-Dienstanbietem und zwischen WLAN-Dienstanbietem und GSM/GPRS-Dienstanbietern ein standardübergreifendes Roaming ermöglichen.

Computernetze oder Local Area Networks (LAN) bestehen üblicherweise aus sog. Nodes, welche verbunden sind über physikalische Medien, wie z.B. Koaxialkabel, Twisted Pair oder optische Glasfaserkabel. Diese LANs werden auch als wired LANs (verdrahtete Festnetze) bezeichnet. In den letzten Jahren sind auch drahtlose LANs, sog. wireless LANs, immer populärer geworden (z.B. durch Entwicklungen wie das AirPort-System der Apple Computer, Inc. etc.). Wireless LANs sind speziell geeignet, um mobile Einheiten (Nodes), wie z.B. Laptops, Notebooks, PDAs (Personal Digital Assistant) oder Mobilfunkgeräte, insbesondere Mobilfunktelefone, mit einer entsprechenden Schnittstelle in ein lokales Computemetzwerk einzubinden. Die mobilen Nodes besitzen einen Adapter, welcher einen Sender/Empfänger sowie eine Kontrollkarte umfasst (wie z.B. Infrarot(IR)-Adapter oder einen Tieffrequenzradiowellen-Adapter). Der Vorteil von solchen mobilen Nodes ist, dass sie innerhalb der Reichweite des wireless LANs frei bewegt werden können. Die mobilen Nodes kommunizieren entweder direkt miteinander (Peerto-Peer wireless LAN) oder schicken ihr Signal an eine Basisstation, welche das Signal verstärkt und/oder weiterleitet. Die Basisstationen können ebenfalls Bridgefunktionen umfassen. Über solche Basisstationen mit Bridge-Funktionen, sog. Access Points (AP), können die mobilen Nodes des drahtlosen LAN auf ein wired LAN zugreifen. Typische Netzwerkfunktionen eines Access Points umfassen das Übertragen von Meldungen von einem mobilen Node zu einem anderen, das Senden von Meldungen vom wired LAN zu einem mobilen Node und das Übertragen von Meldungen eines mobilen Nodes auf das wired LAN. Die physikalische Reichweite eines AP wird Basic Service Area (BSA) genannt. Befindet sich ein mobiler Node innerhalb der BSA eines AP, kann er mit diesem AP kommunizieren, falls der AP ebenfalls innerhalb der Signal-Reichweite (Dynamic Service Area (DSA)) des mobilen Nodes liegt. Mehrere APs sind i.N. einem Access Server zugeordnet, der u.a. die Autorisierung der mobilen Nodes mittels einer Benutzerdatenbank überwacht und verwaltet. Die gesamte Fläche, die von den APs eines Access Servers abgedeckt wird, wird als sog. Hot Spot bezeichnet. Mobile Nodes besitzen typischerweise eine Signalstärke von 100 mWatt bis zu einem Watt. Um das wireless LAN mit dem wired LAN zu verbinden, ist es für den AP wichtig zu bestimmen, ob eine bestimmte Meldung (information frame) auf dem Netz für einen Node bestimmt ist, der innerhalb des wired LAN oder innerhalb des wireless LAN liegt, um diese Information, falls notwendig, an den entsprechenden Node weiterzuleiten. Für diesen Zweck besitzen APs sog. Bridge-Funktionen, z.B. entsprechend dem Standard IEEE Std 802.1 D-1990 "Media Access Control Bridge" (31-74 ff). Bei solchen Bridgefunktionen wird ein neuer mobiler Node im wireless LAN typischerweise in einer FDB (Filtering Database) des AP registriert, in dessen Reichweite der Node liegt. Bei jedem Information-Frame auf dem LAN vergleicht der AP die Zieladresse mit den Adressen (MAC-Adressen (Media Access Control Addresses)), welche er im FDB abgespeichert hat und sendet, verwirft oder überträgt den Frame auf das wired LAN bzw. auf das wireless LAN.

Bei mobiler Netzwerkbenutzung sollte ein bestehender IP-Zugriff von Applikationen auf dem mobilen Node nicht unterbrochen werden, wenn der Benutzer seinen Standort im Netzwerk ändert. Im Gegenteil sollten alle Verbindungs- und Schnittstellenänderungen, z.B. bei einem Wechsel in unterschiedlichen Hot Spots, insbesondere unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch z.B. während der Benutzung von Real-Time Applikationen. Wirkliches mobiles IP-Computing weist viele Vorteile basierend auf einem jederzeitigen stabilen Zugang zum Internet auf. Mit einem solchen Zugang lässt sich die Arbeit frei und unabhängig vom Schreibtisch aus gestalten. Die Anforderungen an mobile Nodes in Netzwerken unterscheidet sich aber von der eingangs erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zu Genüge. So kann insbesondere mobiles Computing mit Internet Zugriff zusammen mit anderen Applikationen wie z.B. in Kombination mit Positionsbestimmungsgeräten, wie dem satellitenbasierenden GPS (Global Positioning System) sinnvoll sein.

Eines der Probleme beim mobilen NetzwerkzugrifFvia Internet Protokoll (IP) ist, dass das IP-Protokoll, welches dazu benutzt wird, die Datenpakete von der Quelladresse (Source Address) zur Zieladresse (Destination Address) im Netz zu routen, sog. IP-Adressen (IP: Internet Protocol) benutzt. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den Mobile IP Standart (IEFT RFC 2002, Okt. 1996) der Internet Engineering Task Force (IETF) gelöst, indem das Mobile IP dem mobilen Node erlaubt, zwei IP-Adressen zu benutzen. Die eine davon ist die normale, statische IP-Adresse (Home-Adresse), die den Ort des Heimnetzes angibt, während die zweite eine dynamische IP Care-Of-Adresse ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Eines der am häufigsten verwendeten Protokolle zur Authentifizierung eines Benutzers in einem wireless LAN ist das opensource Protokoll IEEE 802.1x (in der aktuellen Version 802.11) der Institute of Electrical and Electronics Engineers Standards Association. Die IEEE 802.1x Authentifizierung erlaubt den authentifizierten Zugriff auf IEEE 802 Medien, wie z.B. Ethernet, Tokenring und/oder 802.11 wireless LAN. Das 802.11 Protokoll erzeugt für wireless LAN, d.h. für drahtlose, lokale Netzwerke, eine 1 oder 2 Mbps Übertragung im 2.4 GHz Band, wobei entweder FHSS (Frequency Hopping Spread Spectrum) oder DSSS (Direct Sequence Spread Spectrum) benutzt wird. 802.1x unterstützt zur Authentifizierung EAP (Extensible Authentication Protocol) und TLS (Wireless Transport Layer Security). 802.11 unterstützt ebenfalls RADIUS. Obwohl die RADIUS-Unterstützung bei 802.1 x optional ist, ist zu erwarten, dass die meisten 802.1x Authenticators RADIUS unterstützen werden. Das IEEE 802.1x Protokoll ist ein sog. Port-basierendes Authentifizierungsprotokoll. Es kann in jeder Umgebung verwendet werden, in welcher ein Port, d.h. eine Interface eines Gerätes, bestimmt werden kann. Bei der Authentifizierung basierend auf 802.1 x können drei Einheiten unterschieden werden: das Gerät des Benutzers (Supplicant/Client), den Authenticator und den Authentifikationsserver. Der Authenticator ist dafür zuständig, den Supplicant zu authentifizieren. Authenticator und Supplicant sind beispielsweise über ein Point-to-Point LAN Segment oder eine 802.11 wireless Link verbunden. Authenticator und Supplicant besitzen einen definierten Port, eine sog. Port Access Entity (PAE), die einen physikalischen oder virtuellen 802.1x Port definiert. Der Authentifikationsserver erzeugt die vom Authenticator benötigten Authentifikationsdienste. So verifiziert er die vom Supplicant gelieferten Berechtigungsdaten bezüglich der beanspruchten Identität.

Die Authentifikationsserver basieren meistens auf RADIUS (Remote Authentication Dial-in User Service) der IETF (Internet Engineering Task Force). Die Benutzung des RADIUS Authentifizierungsprotokolls und Accountsystems ist weit verbreitet bei Netzwerkeinheiten, wie z.B. Router, Modemserver, Switch etc. und wird von den meisten Internet Service Providern (ISP) benutzt. Wählt sich ein Benutzer bei einem ISP ein, muss er normalerweise einen Benutzernamen und ein Passwort eingeben. Der RADIUS-Server überprüft diese Information und autorisiert den Benutzer zum ISP-System. Der Grund für die Verbreitung von RADIUS liegt u.a. darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzem (Hinzufügen, Löschen von Benutzern etc.). So ist das z.B. bei ISP (Internet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten permanenten Schutz vor Hackern. Die Remoteauthentifizierung von RADIUS basierend auf TACACS+ (Terminal Access Controller Access Control System+) und LDAP (Lightweight Directory Access Protocol) ist gegen Hacker relativ sicher. Viele andere Remote Authentifizierungsprotokolle haben dagegen nur einen zeitweisen, ungenügenden oder gar keinen Schutz vor Hackerangriffen. Ein anderer Vorteil ist, dass RADIUS zur Zeit der de-facto Standard für Remote Authentifizierung ist, womit RADIUS auch von fast allen Systemen unterstützt wird, was bei anderen Protokollen nicht der Fall ist.

Das oben erwähnte Extensible Authentication Protocol (EAP) ist eigentlich eine Erweiterung zum PPP (Point-to-Point Protocol) und ist definiert durch das Request for Comments (RFC) 2284 *PPP Extensible Authentification Protocol (EAP)* der IETF. Mittels PPP lässt sich ein Computer z.B. an den Server eines ISP anbinden. PPP arbeitet im Data Link Layer des OSI Model und schickt die TCP/IP-Pakete des Computers an den Server des ISP, der das Interface zum Internet bildet. Im Gegensatz zum älteren SLIP Protokoll (Serial Line Internet Protocol) arbeitet PPP stabiler und besitzt Fehlerkorrekturen. Das Extensible Authentication Protocol ist ein Protokoll auf einem sehr allgemeinen Level, das die verschiedensten Authentifizierungsverfahren unterstützt, wie z.B. Token Cards, Kerberos des Massachusetts Institute of Technology (MIT), Streichlisten-Passwörter, Zertifikate, Public Key Authentication und Smartcards oder sog. Integrated Circuit Cards (ICC). IEEE 802.1x definiert die Spezifikationen, wie EAP in die LAN-Frames intergriert sein müssen. Bei Kommunikation in drahtlosen Netzwerken mittels EAP verlangt ein Benutzer über die drahtlose Kommunikation bei einen Access Point (AP), d.h. eines Verbindungs-HUP für den Remote Access Client oder Supplicant zum WLAN, Zugriff auf das wireless LAN. Der AP fordert darauf vom Supplicant die Identifikation des Benutzers und übermittelt die Identifikation an den oben genannten Authentifikationsserver, der z.B. auf RADIUS basiert. Der Authentifikationsserver lässt den Access Point die Identifikation des Benutzers rücküberprüfen. Der AP holt sich diese Authentifizierungsdaten vom Supplicant und übermittelt diese an den Authentifikationsserver, der die Authentifizierung beendet.

Bei EAP erzeugt ein beliebiges Authentifizierungsverfahren eine Remote Access Verbindung. Das genaue Authentifikationsschema wird jeweils zwischen dem Supplicant und dem Authenticator (d.h. dem Remote Access Server, dem Internet Authentification Service (IAS) Server bzw. bei WLAN dem Access Point) festgelegt. Wie oben erwähnt, unterstützt EAP dabei viele unterschiedliche Authentifikationsschemata, wie z.B. generische Token Card, MD5-Challenge, Transport Level Security (TLS) für Smartcards, S/Key und mögliche zukünftige Authentifizierungstechnologien. EAP erlaubt eine von der Anzahl nicht beschränkte Frage-Antwort-Kommunikation zwischen Supplicant und Authenticator, wobei der Authenticator bzw. der Authentifikationsserver spezifische Authentifizierungsinformation verlangt und der Supplicant, d.h. der Remote Access Client antwortet. Beispielsweise kann der Authentifikationsserver über den Authenticator bei den sog. Security Token Cards einzeln zuerst einen Benutzernamen, dann eine PIN (Personal Identity Number) und schlussendlich einen Token Card Value vom Supplicant verlangen. Bei jedem Frage-Antwort-Durchgang wird dabei ein weiterer Authentifizierungslevel durchgeführt. Werden alle Authentifizierungslevels erfolgreich beantwortet, ist der Supplicant authentifiziert. Ein spezifisches EAP Authentifikationsschema wird als EAP-Typ bezeichnet. Beide Seiten, d.h. Supplicant und Authenticator müssen den gleichen EAP-Typ unterstützen, damit die Authentifizierung durchgeführt werden kann. Wie erwähnt, wird dies zu Beginn zwischen Supplicant und Authenticator festgelegt. Authentifikationsserver basierend auf RADIUS unterstützen im Normalfall EAP, was die Möglichkeit gibt, EAP-Meldungen an einen RADIUS-Server zu schicken.

Im Stand der Technik sind ebenfalls EAP-basierende Verfahren zur Authentifizierung eines Benutzers und zur Vergabe von Sessions Keys an den Benutzer mittels des GSM Subscriber Identity Moduls (SIM) bekannt. Die GSM Authentifizierung basiert auf einem Frage-Antwort-Verfahren, einem sog. Challenge-Response Verfahren. Dem Authentifikationsalgorithmus der SIM-Karte wird als Challenge (Frage) eine 128-bit Zufallszahl (üblicherweise bezeichnet als RAND) gegeben. Auf der SIM-Karte läuft dann ein für den jeweiligen Operator spezifischer, vertraulicher Algorithmus, der als Input die Zufallszahl RAND und einen geheimen, auf der SIM-Karte gespeicherten Schlüssel Ki erhält und daraus eine 32-bit Antwort (SRES) und einen 64-bit-Schlüssel Kc generiert. Kc ist zur Verschlüsslung des Datentransfers über drahtlose Schnittstellen gedacht (GSM Technical Specification GSM 03.20 (ETS 300 534): "Digital cellular telecommunication system (Phase 2); Security related network functions", European Telecommunications Standards Institute, August 1997). Bei der EAP/SIM Authentifizierung werden mehrere RAND Challenge zum Generieren von mehreren 64-bit Kc-Schlüsseln verwendet. Diese Kc-Schlüssel werden zu einem längeren Session Key kombiniert. Mit EAP/SIM erweitert das normale GSM Authentifizierungsverfahren, indem die RAND-Challenges zusätzlich einen Message Authentification Code (MAC) besitzen, um gegenseitige Authentifizierung zu erzeugen. Um die GSM-Authentifizierung durchzuführen, sollte der Authentifikationsserver ein Interface zum GSM-Netzwerk besitzen. Der Authentifikationsserver arbeitet folglich als ein Gateway zwischen Internet Authentification Service (IAS), Server Netzwerk und der GSM-Authentifikationsinfrastruktur. Zu Beginn der EAP/SIM Authentifizierung verlangt der Authentifikationsserver mit einem ersten EAP-Request durch den Authenticator vom Supplicant u.a. die International Mobile Subscriber Identity (IMSI) des Benutzers. Mit der IMSI erhält der Authentifikationsserver auf Anfrage vom Authentifikationszenter (AuC) des entsprechenden Mobilfunknetz-Dienstanbieters, üblicherweise im GSM-Netzwerk als Home Location Register (HLR) bzw. Visitor Location Register (VLR) bezeichnet, n GSM-Triplets. Von den Triplets erhält der Authentifikationsserver ein Message Authentification Code für n*RAND und eine Lebensdauer für den Schlüssel (zusammen MAC_RAND) sowie einen Session Schlüssel. Mit diesen kann der Authentifikationsserver die GSM-Authentifizierung auf der SIM-Karte des Supplicant bzw. des Benutzers durchführen. Da RAND zusammen mit dem Message Authentification Code MAC_RAND an den Supplicant gegeben wird, wird es für den Supplicant möglich zu überprüfen, ob die RANDs neu sind und durch das GSM-Netzwerk generiert wurden.

Für das Billing der von mobilen Einheiten beanspruchten Leistung in GSM-Netzwerken ist im Stand der Technik das sog. TAP-Protokoll (TAP: Transferred Account Procedure) der Transferred Account Data Interchange Group (TADIG) der GSM-Vereinigung bekannt. GSM beruht auf dem Konzept des Roaming, was einem Benutzer eines Mobilfunkgerätes erlaubt, sein Mobilfunkgerät in jedem beliebigen Land und Netzwerk zu benutzen. Das Billing der beanspruchten Leistung ist dabei keinesfalls aber trivial. Heute sind weltweit mehr als 400 GSM-Netzwerke in Betrieb und dazu existieren schätzungsweise mehr als 20'000 individuelle Roaming-Vereinbarungen zwischen den Netzwerkbetreibern. Um das Billing zu ermöglichen liegt folglich hinter der scheinbar einfachen Idee des Roamings ein äusserst komplexer Prozess von Informationserfassung, Informationsverteilung und Informationsauswertung. Das Transferred Account Procedure Protokoll (TAP) ist ein Verfahren, durch welches Mobilfunknetzdienstanbieter Roaming Billing Informationen austauschen. Am 04. Juni 2000 wurde nach TAP2 und TAP2+ schliesslich TAP3 lanciert. TAP3 kann heute als der Standard bezeichnet werden, obwohl TAP ein sich weiterentwickelndes Protokoll ist.

Der meiste Voice- oder Datenverkehr in GSM-Netzwerken kommt oder endet in einem anderen Netzwerk, als der mobile Benutzer zur Zeit ist. Der Betreiber eines lokalen Netzwerkes erhebt Gebühren für jeden Anruf, der bei einem seiner Benutzer endet, unabhängig davon, ob es sich um ein Festnetz oder ein Mobilfunknetz handelt. Deshalb vereinbaren die lokalen Fixnetzbetreiber mit den lokalen Mobilfunknetzbetreibern gegenseitig Übereinkommen, um das Erheben der Gebühren zu vereinfachen. Damit ist es dann auch nicht notwendig, dass, um einen Anruf eines Schweizer Mobilfunknetzbenutzers zu einem kanadischen Festnetznetzbenutzer zu verrechnen, der Schweizer Mobilfunknetzbetreiber mit dem kanadischen Festnetznetzanbieter ein Übereinkommen schliesst. Normalerweise hat der Schweizer Festnetzanbieter mit dem kanadischen Festnetzanbieter bereits ein Übereinkommen betreffend Verrechnungsart und Gebühren geschlossen und der Schweizer Mobilfunknetzbetreiber verrechnet über den Schweizer Festnetzanbieter mit einer entsprechenden Vereinbarung. Die Kosten werden üblicherweise entweder direkt (retail billing) oder über einen Service Provider (wholesale billing) dem Benutzer verrechnet. Die Art des Verrechnens von Roaming-Daten- oder Voiceverkehr zwischen unterschiedlichen Mobilfunknetzen (PMN: Public Mobile Network) erfolgt mittels des TAP-Protokolls. Roaming Call Records werden typischerweise entweder als TAP oder als CIBER (Cellular Intercarrier Billing Exchange Roamer) Records erstellt. CIBER Records werden von Mobilfunknetzbetreibern benutzt, welche mit AMPS basierenden Technologien arbeiten, wie z.B. AMPS, IS-136 TDMA und IS-95 CDMA. TAP wird vor allem von GSM-Mobilfunknetzdienstanbieter benutzt und ist das Hauptprotokoll für Verrechnungen in GSM-dominierten Gebieten.

Details eines Anrufes durch einen Benutzer, der sich in einem fremden Netzwerk (VPMN: Visited Public Mobile Network) befindet, werden in einem Mobile Switching Center (MSC) des Netzwerkes registriert. Jeder Anruf erzeugt so ein oder mehrere Anrufrekords. Der GSM-Standart für diese Rekords ist in GSM 12.05 definiert, obwohl viele Anbieter ihre eigenen Formate benutzen. Die Anrufrekords des MSC werden zu einem Billing-System des VPMN zur Verrechnung übertragen. Diese Anrufrekords werden dann in TAP-Format konvertiert und dem entsprechenden Benutzer zugeordnet. Spätestens innerhalb von 36 Stunden werden die TAP-Rekords an den entsprechenden Mobilfunknetzdienstanbieter versandt. Die TAP-Files enthalten zusätzlich Informationen bezüglich des Anbieter-Leistungstarifs (IOT: Inter Operator Tariff) und alle weiteren bilateralen Vereinbarungen und Vergünstigungsschemen. Die TAP-Rekords werden direkt oder üblicher über ein Verrechnungsstelle, wie z.B. ein Clearinghaus, geschickt. Erhält der Heimnetzwerkbetreiber (HPMN: Home Public Mobile Network) ein TAP-Rekord vom VPMN, wird dieses in ein entsprechendes internes Format konvertiert und zusammen mit den normalen Anrufrekords des Benutzers, welche er im Heimnetzwerk erzeugt, verrechnet. Bei Wholesale Billing, bei dem ein Service Provider die anfallenden Kosten dem Benutzer verrechnet, leitet das HPMN die Records weiter an den Service Provider, der die Anrufe insbesondere auch gemäss eigenen Tarifen neu verrechnen kann und die Abrechnung mit z.B. Anrufdetails für den Benutzer erzeugt.

TAP3 unterstützt eine Vielzahl von Diensten. TAP3 wird heute für das Billing zwischen GSM-Dienstanbietern und GSM-Dienstanbietem, GSM-Dienstanbietern und Nicht-GSM-Dienstanbietern (Inter-Standard Roaming) und GSM-Dienstanbietern und Satelliten-Dienstanbietem etc. verwendet. Die drei grundlegenden Dienstkategorien Voice, Fax und sog. Supplementary Services werden bereits seit TAP1 unterstützt. Das Billing von Short Message Service (SMS) ist wegen der Benutzung von Short Message Service Center (SMS-C) Dritter hingegen weniger trivial. Folgende Gründe erschweren das Billing von SMS: 1. ein Roaming-Benutzer kann während dem Roaming eine SMS empfangen (MT-SMS), 2. ein Roaming-Benutzer kann während dem Roaming eine SMS (MO-SMS) versenden, indem er die SMS-C seines Heimnetzwerkes benutzt und 3. ein Roaming-Benutzer kann während dem Roaming eine SMS (MO-SMS) versenden, indem er die SMS-C eines fremden Netzwerkes benutzt. Das Billing von SMS-Diensten wird deshalb erst ab TAP2+ voll unterstützt. Ab TAP3 wird weiter das Billing von Single Circuit Switched Data, HSCSD (High Speed Circuit Switched Data) und GPRS (General Packet Radio Service) unterstützt. TAP3 unterstützt ebenfalls alle Value Added Services (VAS), wie z.B. das sog. Billing for Content. Das Verrechnen von Value Added Services ist jedoch häufig schwierig, da es das Einverständnis des Dienstanbieters zu den verrechneten Diensten voraussetzt. Customised Application Mobile Enhanced Logic (CAMEL) wird ab TAP3.4 unterstützt. CAMEL ist besonders für Anwendungen bei Prepaid-Diensten für Roaming Benutzer wichtig und dürfte in Zukunft stark an Bedeutung gewinnen. Eine andere wichtige Anwendung von TAP3 ist die Unterstützung von Verrechungen gestützt auf Inter Operator Tarif (IOT). IOT ermöglicht dem Heimnetzwerkdienstanbieter (HPMN) spezielle Angebote und Tarife eines fremden Dienstanbieters (VPMN) zu überprüfen und an den Roaming-Benutzer weiterzugeben. So kann z.B. der VPMN Vergünstigungen oder Discounts für unterschiedliche Anrufdienste oder -levels geben und der HPMN kann diese einfach verifizieren und seine Tarife anpassen. Die Möglichkeit des Verrechnens von Roaming-Diensten unabhängig davon, wo sich der Benutzer gerade befindet, ist ein wertvolles Hilfsmittel für Mobilnetzdienstanbieter und verhindert den Verlust von Einnahmen bei zwischenzeitlichen Vergünstigungen durch einen VPMN. Das TAP-Protokoll umfasst ab TAP3 ebenfalls detaillierte Informationen, von wo ein Anruf genau getätigt wurde, bzw. ein Dienst in Anspruch genommen wurde etc., und wo er hingeleitet wurde. Diese Information hilft ein Profil des jeweiligen Benutzers basierend auf seinem Verhalten aufzustellen, was wichtige Informationen liefert, um das Angebot der Dienste auf die Bedürfnisse der Benutzer anzupassen und zu optimieren. Insbesondere kann es dazu verwendet werden, spezielle Location Based Services, wie z.B. Sport- oder Konzertveranstaltungen etc., anzubieten. Schliesslich erlaubt es mit dem Retumed Accounts Procedure (RAP) Protokoll TAP3 auch ein differenziertes Errorhandling. So kann es mit RAP der HPMN u.a. eingehende TAP-Files auf ihre Gültigkeit und Konformität mit dem TAP-Standart überprüfen und falls notwendig verwerfen, ohne dass damit Verrechnungen von Leistungen verloren gingen. Die aktuelle TAP Version 3 kann z.B. durch das Dokument TD.57 referenziert werden.

Der Stand der Technik hat jedoch verschiedenste Nachteile. Zwar ist es möglich, z.B. mit einer EAP-SIM die Authentifizierungsverfahren von den GSM-Netzwerken in der wireless LAN-Technologie zur Authentifizierung von Supplicants bzw. Remote Access Clients zu verwenden, vorausgesetzt der Benutzer besitzt eine IMSI bei einem GSM Dienstanbieter. Ebenso ist es prinzipiell möglich, mittels z.B. Mobile IP der IEFT (Internet Engineering Task. Force) Datenströme zum entsprechenden bei einem Access Servers über einen Access Point angemeldeten mobilen Remote Access Client umzuleiten (routen). Damit sind jedoch bei weitem nicht alle Probleme der mobilen Netzwerkbenutzung gelöst, welche ein wirklich freies Roaming des Benutzers erlauben würden. Eines der Probleme ist, dass im IP-Netzwerk die im GSM Standart benötigten Voraussetzungen bezüglich Sicherheit, Billing und Service Autorisierung nicht mehr gegeben sind. Dies hängt intrinsisch mit der offenen Architektur des IP-Protokolles zusammen. D.h., viele Informationen fehlen im IP-Standard, die zur vollen Kompatibilität mit den GSM-Netzwerken unbedingt benötigt werden. Zudem liefert ein Access Server beruhend z.B. auf RADIUS einen einzelnen Datenstrom. Dieser kann nicht ohne weiteres auf den mehrteiligen Datenstrom des GSM-Standards gemappt werden. Ein anderer Nachteil des Standes der Technik ist, dass wireless LAN heute auf individuellen Hot Spots (d.h. der Basic Service Area der Access Points eines Access Servers) beruhen, die von unterschiedlichen Software- und Hardwareentwicklern der ganzen Welt angeboten werden. Dies erschwert die Zusammenführung beider Welten, da solche Gateway-Funktionen jeweils an die spezifische Lösung angepasst werden müssen. Die technischen Spezifikationen zum GSM Authentifikations-Interface können in MAP (Mobile Application Part) GSM 09.02 Phase 1 Version 3.10.0 gefunden werden.

Die Patentschrift WO 2004/017565 offenbart ein SIM-basierendes, computergestütztes Verfahren zur Authentifikation und Billing in IP-Netzwerken. Dabei werden für das Billing erste Call Detail Records vom Access-Server im WLAN erfasst und auf ein Billing-Modul übertragen, wobei das Billing-Modul Konfigurationsprofile der Access Server umfasst. Ebenfalls werden zweite Call Detail Records vom Access Server des WLAN erfasst und auf ein Proxy-Modul übertragen, wobei das Proxy-Modul die für das Billing notwendigen benutzerspezifische Informationen umfasst. Basierend auf der Informationen des Billing-Moduls und des Proxy-Moduls werden dann TAP-Files erzeugt und mittels eines Clearing-Moduls dem Benutzer des WLANs verrechnet. Die Patentschrift WO 03/050743 offenbart ein System, mittels welchem eine Vielzahl von Content Provider den Zugriff auf ihre Dienstleistungen eines bestimmten Benutzers Verrechnen können. Verlang ein beliebiger Benutzer Zugriff auf einen bestimmten Inhalt eines Providers, wird dem entsprechenden Request basierend auf der IP-Adresse Benutzers mit einem Identity Agent eine Benutzeridentifikation (UDI) zugeordnet. Die UDI wird in einen providerspezifischen Identifier umgewandelt, mittels welchem der Provider den Benutzer identifizieren kann und die bezogenen Leistungen verrechnen kann. Die Patentschrift WO 02/073934 zeigt ein Verfahren zum Zuordnen einer temporären IP-Adresse eines mobilen Benutzers zu einer MSISDN. Die Zuordnung kann z.B. bei Authentifizierungs-, bei Abbuchungs- und bei Personalisierungsprozessen innerhalb eines Dienstnetzwerkes verwendet werden. Die Patentschrift US 6 553 219 zeigt ein ähnliches Verfahren wie WO 02/073934. Bei US 6 553 219 wird dem Benutzer eine eindeutige internationale Mobil-Identität zugeordnet, wobei basierend auf der Mobil-Identität der zugeordnete Service Provider identifiziert werden kann. Das Verfahren kann z.B. zum Identifizieren eines Benutzers im Netzwerk verwendet werden. Schlussendlich zeigt die Patentschrift US 2003/0157926 ein System, um mobile Benutzer in unterschiedlichen WLANs SIM-basiert verrechnen zu können. Dabei erfolgt die Authentifikation stets über einen spezifischen HLR eines bestimmten Netzwerkes GSM1. Weitere HLRs anderer GSM-Netzwerke (GSM2 etc.) können mit dem HLR des GSM1 verknüpft werden, womit die Authentifikationsmöglichkeiten erweitert werden können.

Es ist eine Aufgabe dieser Erfindung, ein neues Verfahren für IP-Nodes, insbesondere für mobile IP-Nodes in heterogenen WLANs vorzuschlagen. Insbesondere soll einem Benutzer ermöglicht werden, problemlos sich zwischen verschiedenen Hot Spots zu bewegen (roaming), ohne dass er sich um Anmeldung, Billing, Service Autorisation etc. bei den verschiedenen WLAN-Dienstanbietem bemühen müsste, d.h. den gleichen Komfort geniesst, wie er es von der Mobilfunktechnologie, wie z.B. GSM, gewohnt ist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass für content-basiertes Billing in IP-Netzwerken ein IP-Node über ein Internet Service Providers auf kostenpflichtige Inhalte von einem oder mehreren Content Providern eines Netzwerkes zugreift, dass der IP-Node auf einen Request eine auf einer SIM-Karte des IP-Nodes gespeicherte IMSI übermittelt und dass die übermittelte IMSI des IP-Nodes in einer Datenbank eines SIM-RADIUS-Moduls gespeichert wird, wobei mittels des SIM-Radius-Moduls eine Authentifizierung und/oder Service Autorisierung des IP-Nodes basierend auf der IMSI der SIM-Karte des mobilen Nodes bei einem HLR und/oder VLR eines GSM-Netzwerkes durchgeführt wird und an das Control-Gateway-Modul übermittelt wird" wobei ein Zugriff des IP-Nodes auf Inhalte eines Content Providers des Netzwerkes über ein Control-Gateway-Modul geleitet wird, und mittels des Control-Gateway-Moduls basierend auf der Zieladresse des Zugriffes auf seine Kostenpflichtigkeit überprüft wird, wobei ein Core Engine Modul beim Zugriff auf das Control-Gateway-Modul entsprechend der vom IP-Node bezogenen Leistung Call Detail Records erfasst, wobei die Call Detail Records mindestens Identität des IP-Nodes und/oder Zeitdauer und/oder Anbieter der beanspruchten Leistung erfasst und an ein Billing-Modul weitergibt, und wobei die Call Detail Records und/oder auf den Call Detail Records basierende Clearingdaten und/oder TAP-Files über ein Billingsystem eines Service Providers oder eines Geldinstitutes verrechnet wird. Das Billing-Modul kann entsprechend der beanspruchten Leistung, z.B. basierend auf den Daten des Core-Engine-Moduls, TAP-Files erzeugen und diese zusammen mit Fakturierungsanweisungen an ein Clearing-Modul übermitteln, wobei das Clearing-Modul die beanspruchte Leistung des Benutzers einem Anbieter eines Festnetzes verrechnet und/oder die TAP-Files zur Verrechnung an einen GSM Dienstanbieter und/oder Internet Service Provider (ISP) übermittelt. Die Fakturierungsanweisungen können z.B. mindestens benutzerspezifische und/oder dienstanbieterspezifische Verrechnungsdaten umfassen. Als IP-Node kann z.B. ein mobiler IP-Node in heterogenen WLANs verwendet werden, wobei der mobile IP-Node über eine drahtlose Schnittstelle innerhalb einer Basic Service Area eines WLANs auf einen Access Point eines WLAN zugreift, wobei die Basic Service Area des WLAN ein oder mehrere einem Access Server zugeordnete Access Points umfasst, und wobei der Access Server das Control-Gateway-Modul umfasst und/oder entsprechende Daten an das Control-Gateway-Modul übermittelt. Zur Identifizierung kann z.B. mittels einer SIM-Benutzerdatenbank und einem SIM-Gateway-Modul der logische IP-Datenkanal des WLAN zu entsprechenden GSM-Daten für Signal- und Datenkanäle eines GSM-Netzwerkes benutzerspezifisch ergänzt werden. Ein Call Detail Record kann z.B. mindestens basierend auf der IP-Adresse des IP-Nodes und Identifikationen der Dienstanbieter, deren Leistung vom IP- Node beansprucht wurde, erstellt werden. Eine Billing-Management-Datenbank kann z.B. IP-Adressen und/oder GSM-Identitifizierung der Benutzer und/oder Dienstanbieter umfassen. Dies hat u.a. den Vorteil, dass ein nahtloses Roaming zwischen unterschiedlichen und heterogenen WLANs möglich wird. Durch das Verbinden der WLAN-Technologie, insbesondere der IP-Netzwerke, mit der GSM-Technologie wird das Roaming des Benutzers möglich, ohne dass er sich um Anmeldung, Billing, Service Autorisation etc. bei den verschiedenen WLAN-Dienstanbietem bemühen müsste, d.h., dass der Benutzer den gleichen Komfort geniesst, wie er es von der Mobilfunktechnologie, wie z.B. GSM, gewohnt ist. Gleichzeitig ist es auf eine völlig neue Art möglich, die Vorteile der offenen IP-Welt (Zugang zum weltweiten Intemet etc.) mit den Vorteilen (Sicherheit, Billing, Service Autorisation etc.) zu verbinden. Die Erfindung erlaubt auch ein Verfahren für ein Roaming in WLANs zu erzeugen, ohne dass bei jedem Access Server ein entsprechendes Modul eingebaut werden müsste. Im Gegenteil kann die Infrastruktur (WLAN/GSM) durch die Verwendung von RADIUS unverändert übernommen werden. Die Verrechnung über ein Billingsystem eines Service Providers kann z.B. dadurch geschehen, dass im Billingsystem Files mit CDR's generieren und/oder bereitstellen werden, welche an Clearing Stellen s.B. des ISP's od. Mobile Operators sendet werden und/oder dass z.B. die Clearing Stellen diese CDR-Files beim Billingsystem abholen.

In einer anderen Ausführungsvariante werden die TAP-Files mindestens basierend auf Inter Operator Tariffs sowie Public Mobile Network TAP Identification Codes erstellt. In Kombination dazu oder als eigenständige Ausführungsvariante ist es z.B. ebenfalls vorstellbar, dass eine Billing-Management-Datenbank Inter Operator Tariffs sowie Public Mobile Network TAP Identification Codes umfasst. Diese Ausführungsvariante hat u.a. den Vorteil, dass der Heimnetzdienstanbieter (HPMN) einfach die IOT des Fremdnetzdienstanbieters (VPMN), in welchem sich der Benutzer zur Zeit befindet (roaming), verifizieren kann. Damit kann der VPMN z.B. Vergünstigungen für spezifische Verbindungen geben und der HPMN kann kontrollieren, dass diese korrekt angewendet wurden. Unabhängig von irgendwelchen Vergünstigungsprogrammen oder Anruflevels des VPMN, kann der HPMN damit auch einfach jede Verbindung und/oder jeden Anruf gemäss seinen eigenen Tarifen neu berechnen etc. Die Möglichkeit des Bestimmens der Preise für Leistungen unabhängig davon, in welchem Fremdnetz und/oder Heimnetz sich der Benutzer gerade befindet, kann ein wertvolles Mittel bei der Verrechnung von Leistungen für einen HPMN sein, mit welchem es sich z.B. vermeiden lässt, besondere Gebührenermässigungen eines VPMN zu verlieren. Ebenso lassen sich damit bestimmte Verrechnungsschemen für einen HPMN erst realisieren, wie z.B. spezielle Preise für Verbindungen mit dem Heimnetz und/oder Heimatland des Benutzers oder/oder z.B. Anrufe innerhalb Ländergemeinschaften, wie beispielsweise Europa etc.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

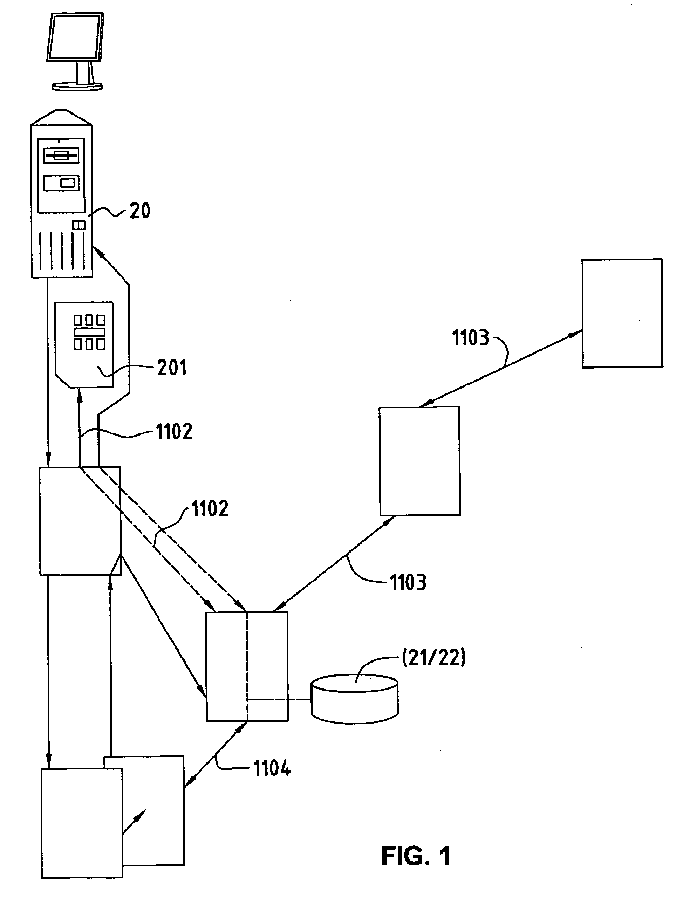

Figur 1 zeigt ein Blockdiagramm, welches schematisch ein erfindungsgemässes Verfahren und ein System für content-basiertes Billing in IP-Netzwerken illustriert, wobei mobile IP-Nodes 20 über eine kontaktbehaftete Schnittstelle mit einer SIM-Karte 201 verbunden sind und mittels einer Verbindung 48 auf ein Control-Gateway-Modul und/oder Access Points 21/22 zugreifen. Das Control-Gateway-Modul und/oder der Access Server 23 des WLAN authentifiziert den IP-Node 20 basierend auf einer auf der SIM-Karte 201 abgespeicherten IMSI bei einem HLR 37 und/oder VLR 37 eines GSM-Mobilfunknetzes. Schritt 1102 zeigt eine mögliche Authentifikation, wobei beispielsweise ein JAVA-Applet mittels eines Browsers geladen wird, die IMSI von der SIM-Karte gelesen wird und entsprechende Authentifizierungsdaten ausgetauscht werden. Schritt 1103 zeigt den Konvertierungsprozess, wobei die IP des IP-Nodes 20 zu SS7 konvertiert wird und beim HLR eine Validierung der IMSI angefordert wird. In Schritt 1104 werden schliesslich die entsprechenden Billing- und/oder Clearingdaten generiert und verrechnet.

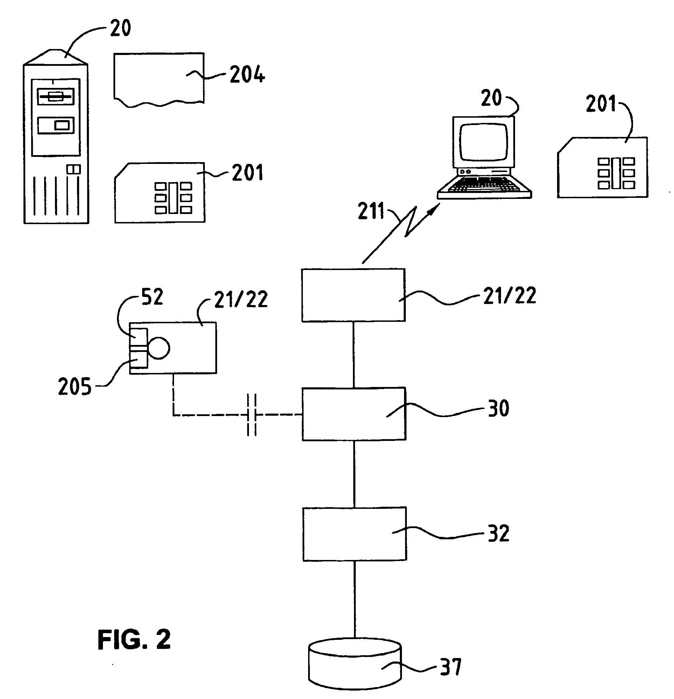

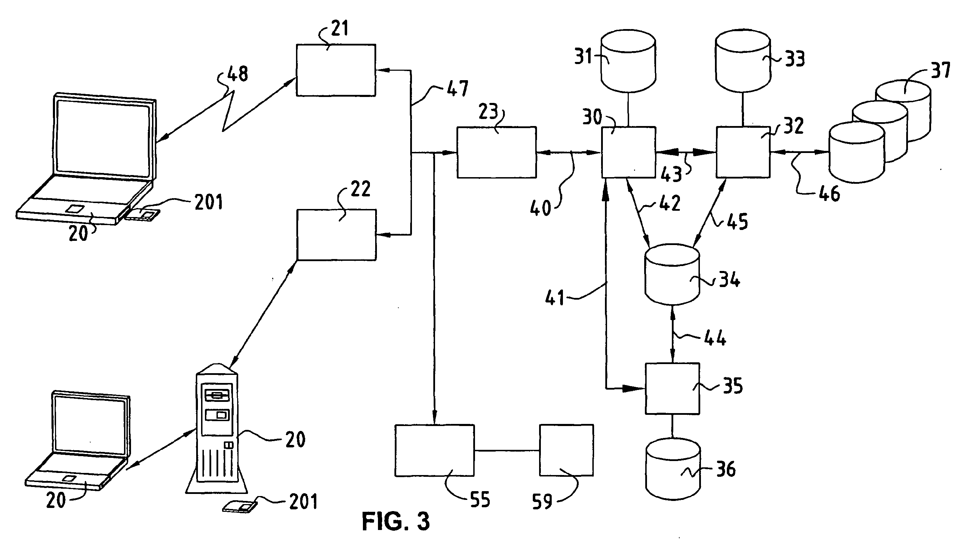

Figur 2 und 3 zeigen ein Blockdiagramm, welches schematisch ebenfalls ein erfindungsgemässes Verfahren und ein System für content-basiertes Billing in IP-Netzwerken illustriert, wobei ein IP-Node 20 über einen Internet Service Provider auf kostenpflichtige Inhalte von einem oder mehreren Content Providern eines Netzwerkes zugreift, und wobei der IP-Node 20 auf einen Request eine auf einer SIM-Karte 201 des IP-Nodes 20 gespeicherte IMSI an ein Control-Gateway-Modul 22 übermittelt und die IMSI des IP-Nodes 20 in einer Datenbank eines SIM-RADIUS-Moduls 30 gespeichert wird.

Figur 1 illustriert eine Architektur, die zur Realisierung der Authentifikation der Erfindung verwendet werden kann. Figur 1 zeigt ein Blockdiagramm, welches schematisch ein erfindungsgemässes Verfahren und ein System für content-basiertes Billing in IP-Netzwerken illustriert, wobei ein IP-Node 20 über einen Intemet Service Provider auf kostenpflichtige Inhalte von einem oder mehreren Content Providern eines Netzwerkes zugreift, und wobei der IP-Node 20 auf einen Request eine auf einer SIM-Karte 201 des IP-Nodes 20 gespeicherte IMSI an ein Control-Gateway-Modul 22 übermittelt und die IMSI des IP-Nodes 20 in einer Datenbank eines SIM-RADIUS-Moduls 30 gespeichert wird. In der Figur 1/2/3 bezieht sich das Bezugszeichen 20 auf einen IP-Node, insbesondere auf einen mobilen Node, welcher über die notwendige Infrastruktur, einschliesslich Hardware- und Softwarekomponenten verfügt, um ein beschriebenes erfindungsgemässes Verfahren und/oder System zu realisieren. Der IP-Node kann z.B. ein fest installierter oder ein mobiler IP-Node sein. So kann der IP-Node 20 z.B. ein PC oder sonst ein fest installiertes IP-fähiges Netzwerkgerät sein. Handelt es sich um einen mobilen Node 20 sind u.a. alle möglichen sog. Customer Premise Equipment (CPE) zu verstehen, die zur Benutzung an verschiedenen Netzwerkstandorten und/oder verschiedenen Netzwerken vorgesehen sind. Diese umfassen beispielsweise sämtlich IP-fähigen Geräte, wie z.B. PDAs, Mobilfunktelefone und Laptops. Die mobilen CPEs oder Nodes 20 besitzen ein oder mehrere verschiedene physikalische Netzwerkschnittstellen, die auch mehrere unterschiedliche Netzwerkstandards unterstützen können. Die physikalischen Netzwerkschnittstellen des mobilen Nodes können z.B. Schnittstellen zu WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder Ethernet oder einem anderen Wired LAN (Local Area Network) etc. umfassen. Die Referenznummer 48 steht dementsprechend für die verschiedenen heterogenen Netzwerke, wie z.B. ein Bluetooth-Netzwerk, z.B. für Installationen in überdachten Örtlichkeiten, ein Mobilfunknetz mit GSM und/oder UMTS etc., ein Wireless LAN z.B. basierend auf IEEE wireless 802.1 x, aber auch einem Wired LAN, d.h. einem lokalen Festnetz, insbesondere auch dem PSTN (Public Switched Telephone Network) etc.. Prinzipiell ist zu sagen, dass das erfindungsgemässe Verfahren und/oder System nicht an einen spezifischen Netzwerkstandart gebunden ist, sofern die erfindungsgemässen Merkmale vorhanden sind, sondern können mit einem beliebigen LAN realisiert werden. Die Schnittstellen 202 des IP-Nodes können nicht nur packet-switched Schnittstellen, wie sie von Netzwerkprotokollen wie z.B. Ethernet oder Tokenring direkt benutzt werden, sondern auch circuitswitched Schnittstellen, die mittels Protokollen wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse wie eine MAC- oder eine DLC-Adresse besitzen. Wie teilweise erwähnt, kann die Kommunikation über das LAN, beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über IEEE wireless 802.1 x oder einen anderen Nutzkanal erfolgen. Der mobile IP-Node 20 kann ein Mobile IP-Modul und/oder ein IPsec-Modul umfassen. Die Hauptaufgabe des Mobile IP besteht darin, den mobilen IP-Node 20 im IP-Netzwerk zu authentifizieren und die IP-Pakete, die den mobilen Node 20 als Zieladresse haben, entsprechend umzuleiten. Zu den weiteren Mobile IP Spezifikationen siehe z.B. auch IEFT (Internet Engineering Task Force) RFC 2002, IEEE Comm. Vol. 35 No. 5 1997 etc. Mobile IP unterstützt insbesondere IPv6 und IPv4. Die Mobile IP Fähigkeiten können vorzugsweise mit den Sicherheitsmechanismen eines IPsec (IP security protocol)-Moduls kombiniert werden, um ein sicheres mobiles Datenmanagement im öffentlichen Internet zu garantieren. IPsec (IP security protocol) erzeugt paketweise oder socketweise Authentifikations-/Vertraulichkeitsmechanismen zwischen Netzwerkknoten, die beide IPsec benutzen. Eine der Flexibilitäten von IPsec liegt insbesondere darin, dass es sich paketweise aber auch für einzelne Sockets konfigurieren lässt. IPsec unterstützt IPvx, insbesondere IPv6 und IPv4. Für detailliertere IPsec-Spezifikationen siehe z.B. Pete Loshin: IP Security Architecture; Morgan Kaufmann Publishers; 11/1999 oder A Technical Guide to IPsec; James S et al.; CRC Press, LLC; 12/2000 etc. Obwohl IPsec bei diesem Ausführungsbeispiel als Beispiel für die Verwendung von Sichefieitsprotokollen auf IP-Niveau beschrieben worden ist, sind alle möglichen anderen Sicherheitsprotokolle oder -mechanismen oder gar das Weglassen von Sicherheitsprotokollen erfindungsgemäss vorstellbar.

Weiter ist der IP-Node 20 über eine kontaktbehaftete Schnittstelle mit einer SIM-Karte 201 (SIM: Subscriber Identity Module) verbunden, auf welcher eine IMSI (International Mobile Subscriber Identifier) eines Benutzers von GSM-Netzwerken abgespeichert ist. Bei IP-Nodes 20 in einem Festnetz erhält der IP-Node 20 z.B. Zugriff über xDSL, Einwahl über das öffentlich geschaltete Telefonnetzwerk mittels PPP oder einem gerouteten lokalen Netzwerk etc. etc. beispielsweise Zugriff auf das weltweite Backbone Netzwerk Internet oder ein anderes mit den Content Providern verbundenes Netzwerk. Mittels des SIM-Radius-Moduls 30 wird eine Authentifizierung und/oder Service Autorisierung des IP-Nodes 20 basierend auf der IMSI der SIM-Karte 201 des Nodes 20 bei einem HLR 37 und/oder VLR 37 eines GSM-Netzwerkes durchgeführt und an das Control-Gateway-Modul (22) übermittelt. Bei mobilen IP-Nodes 20 fordert zur Authentifizierung der IP-Node 20 über eine drahtlose Schnittstelle 202 innerhalb einer Basic Service Area eines WLANs bei einem Access Point 21/22 Zugriff auf das WLAN. Wie bereits beschrieben, können die verschiedenen WLANs unterschiedlicher Hot Spots heterogene Netzwerkstandards und - protokolle umfassen, wie z.B. WLAN basierend auf dem IEEE wireless 802.1x, Bluetooth etc.. Die Basic Service Area des WLAN umfasst ein oder mehrere einem Access Server 23 zugeordnete Access Points 21/22. Der mobile IP-Node 20 übermittelt auf einen Request des Access Servers 23 eine auf der SIM-Karte 201 des mobilen IP-Nodes 20 gespeicherte IMSI an den Access Server 23. Die IMSI des mobilen IP-Nodes 20 wird mittels eines SIM-RADIUS-Moduls 30 gespeichert. Basierend auf der IMSI wird mittels von in einer SIM-Benutzerdatenbank 34 abgespeicherten Informationen der logische IP-Datenkanal des WLAN zu entsprechenden GSM-Daten für Signal- und Datenkanäle eines GSM-Netzwerkes benutzerspezifisch ergänzt. Das GSM System umfasst Datenkanäle, die sog. Traffic Channels, und Kontrollsignalkanäle, sog. Signaling Channels. Die Traffic Channeles (z.B. TCH/FS, TCH/HS, TCH/F9,614.8/2.4 und TCH/H4.8/2.4 etc.) sind für Benutzerdaten reserviert, während die Signaling Channels (z.B. CCCH: Common Control Channels, RACH: Random Access Channels, DCCH: Dedicated Control Channels, CBCH: Cell Broadcast Channel etc.) für Netzwerk-Managment, Kontrollfunktionen etc. verwendet werden. Die logischen Kanäle sind über die Schnittstelle nicht alle gleichzeitig benutzbar, sondern anhand der GSM-Spezifikationen nur in bestimmten Kombinationen. Mittels eines SIM-Gateway-Moduls 32 werden zur Durchführung der Authentifizierung des IP-Nodes basierend auf den GSM-Daten die notwendigen SS7/MAP-Funktionen generiert, wobei das SIM-RADIUS-Modul 30 mittels SIM-Benutzerdatenbank 34 und SIM-Gateway-Modul 32 die Authentifizierung des mobilen IP-Nodes basierend auf der IMSI der SIM-Karte 201 des mobilen Nodes 20 bei einem HLR 37 (Home Location Register) und/oder VLR 37 (Visitor Location Register) eines GSM-Netzwerkes durchführt.

Die Authentifizierung des IP-Nodes 20 kann z.B. mittels Extensible Authentication Protocol durchgeführt werden. Für das EAP-basierende Verfahren zur Authentifizierung eines Benutzers und zur Vergabe von Sessions Keys an den Benutzer mittels des GSM Subscriber Identity Moduls (SIM) kann z.B. folgendes Challenge-Response Verfahren verwendet werden. Dem Authentifikationsalgorithmus der SIM-Karte wird als Challenge (Frage) eine 128-bit Zufallszahl (RAND) gegeben. Auf der SIM-Karte läuft dann ein für den jeweiligen Operator spezifischer, vertraulicher Algorithmus, der als Input die Zufallszahl RAND und einen geheimen, auf der SIM-Karte gespeicherten Schlüssel Ki erhält und daraus eine 32-bit Antwort (SRES) und einen 64-bit Schlüssel Kc generiert. Kc dient zur Verschlüsselung des Datentransfers über drahtlose Schnittstellen (GSM Technical Specification GSM 03.20 (ETS 300 534): "Digital cellular telecommunication system (Phase 2); Security related network functions", European Telecommunications Standards Institute, August 1997). Zur Authentifizierung werden mehrere RAND Challenge zum Generieren von mehreren 64-bit Kc Schlüsseln verwendet. Diese Kc-Schlüssel werden zu einem längeren Session Key kombiniert. Für mobile IP-Node 20 kann das System zwischen dem Access Point 21 und dem Access Server 23 wie erwähnt ein IEEE 802.1 x Port-basierenden Authentifikationsverfahren umfassen, wobei der mobile IP-Node 20 (Remote Access Client / Supplicant) über den Access Point 21 (Authenticator) beim Access Server 23 (Authentifikations-Server) authentifiziert wird. Das WLAN basiert in diesem Ausführungsbeispiel auf IEEE 802.11. Bei IP-Nodes 20 in einem Festnetzwerk kann das gleiche Verfahren über das Control-Gateway-Modul 22 durchgeführt werden. Um die GSM-Authentifikation durchzuführen, fungiert das SIM-Gateway-Modul 32 als Gateway zwischen Internet Authentification Service (IAS) Server Netzwerk und der GSM Authentifikationsinfrastruktur, d.h. dem Control-Gateway-Modul 22 bzw. dem Access Point 22 (Access Server 23) und dem HLR 37 bzw. dem VLR 37. Zu Beginn der EAP/SIM Authentifizierung verlangt das Control-Gateway-Modul 22 mit einem ersten EAP-Request 1 durch das Contol-Gateway-Modul 22 vom IP-Node 20 u.a. die International Mobile Subscriber Identity (IMSI) des Benutzers. In einem WLAN ist es der Access Server 23, der mit einem ersten EAP-Request 1 durch den Access Point 22 vom mobilen IP-Node 20 u.a. die International Mobile Subscriber Identity (IMSI) des Benutzers verlangt. Diese wird vom IP-Node 20 mittels EAP-Response 2 an das Control-Gateway-Modul 22 bzw. den Access Point 21 übermittelt. Mit der IMSI erhält der Access Server 23 auf eine Triplet-Anfrage vom entsprechenden HLR 37 bzw. VLR 37 bezeichnet, n GSM Triplets. Basierend auf den Triplets kann der Access Server 23 ein Message Authentification Code für n*RAND und eine Lebensdauer für den Schlüssel (zusammen MAC_RAND) sowie einen Session Schlüssel erhalten. In einem 3. EAP-Schritt 3 schickt der Access Server 23 dann z.B. einen EAP-Request vom Typ 18 (SIM) an den mobilen IP-Node 20 und erhält die entsprechende EAP-Response 4. EAP-Datenpakete vom Typ SIM haben zusätzlich ein spezielles Subtyp-Feld. Der erste EAP-Request/SIM ist vom Untertype 1 (Start). Dieses Paket enthält die Liste der EAP/SIM Protokoll Versions-Nummem, die durch den Access Server 23 unterstützt werden. Der EAP-Response/SIM (Start) 4 des IP-Nodes 20 enthält die vom IP-Node 20 ausgewählte Versionsnummer. Der IP-Node 20 muss eine der im EAP-Request angegebenen Versionsnummern auswählen. Der EAP-Response/SIM (Start) des IP-Nodes 20 enthält ebenfalls einen Lebensdauervorschlag für den Schlüssel (Key) und eine Zufallsnummer NONCE_MT, die durch den IP-Node generiert wurde. Alle folgenden EAP-Requests enthalten alle die gleiche Version wie das EAP-Response/SIM (Start) Datenpaket des IP-Nodes 20. Wie erwähnt, besitzt diese Ausführungsvariante um die GSM-Authentifikation durchzuführen ein SIM-Gateway-Modul 32, das als Gateway zwischen dem Access Server 23 und dem HLR 37 bzw. dem VLR 37 fungiert. Nach Erhalt der EAP-Response/SIM erhält der Access Server 23 ein n GSM Triplet vom HLR/VLR 37 des GSM-Netzwerkes. Aus den Triplets berechnet der Access Server 23 MAC_RAND und den Session Key K. Die Berechnung der kryptographischen Werte des SIM-generierten Session Key K und der Message Authentification Codes MAC-Rand und MAC_SRES können beispielsweise dem Dokument "HMAC: Keyed-Hashing for Message Authentification" von H. Krawczyk, M. Bellar und R. Canetti (RFC2104, Feb. 1997) entnommen werden. Der nächste EAP-Request 5 des Access Servers 23 ist vom Typ SIM und Subtyp Challenge. Der Request 5 enthält die RAND Challenges, die vom Access Server 23 beschlossene Lebensdauer des Schlüssels, ein Message Authentication Code für die Challenges und die Lebenszeit (MAC_RAND). Nach Erhalt des EAP-Request/SIM (Challenge) 5 läuft der GSM-Authentifikationsalgorithmus 6 auf der SIM-Karte und berechnet eine Kopie von MAC_RAND. Der mobile IP-Node 20 kontrolliert, dass der berechnete Wert von MAC_RAND gleich dem erhaltenen Wert von MAC_RAND ist. Ergibt sich keine Übereinstimmung der beiden Werte, bricht der mobile IP-Node 20 das Authentifikationsverfahren ab und schickt keine von der SIM-Karte berechneten Authentifikationswerte an das Netzwerk. Da der Wert RAND zusammen mit dem Message Authentifikations-Code MAC_RAND erhalten wird, kann der IP-Node 20 sicherstellen, dass RAND neu ist und vom GSM-Netzwerk generiert wurde. Sind alle Überprüfungen richtig gewesen, schickt der IP-Node 20 ein EAP-Response/SIM (Challenge) 7, der als Antwort MAC_SRES des IP-Nodes 20 enthält. Der Access Server 23 überprüft, dass MAC_RES korrekt ist und schickt schliesslich ein EAP-Success Datenpacket 8, welches dem IP-Node 20 anzeigt, dass die Authentifizierung erfolgreich war. Der Access Server 23 kann zusätzlich den erhaltenen Session Key mit der Authentifizierungs-Meldung (EAP-Success) an den Access Point 22 bzw. das Control-Gateway-Modul 22 schicken. Bei erfolgreicher Authentifizierung wird ein Location Update beim HLR 37 und/oder VLR 37 durchgeführt und der IP-Node 20 erhält in einer Customer Database des Access Servers einen entsprechenden Eintrag. Bei IP-Nodes 20 in Festnetzen sowie bei mobilen IP-Nodes 20 in WLANs wird ein einsprechende Eintrag in einem Speichermodul des Control-Gateway-Moduls 22 vorgenommen.

Wurde die Authentifikation eines IP-Nodes 20 bzw. der IMSI durchgeführt, kann über den IP-Node 20 Zugriff auf Inhalte z.B. kostenpflichtiger Dateien von Content Providern gefordert werden. Für den Zugriff des IP-Nodes 20 auf Inhalte eines Content Providers des Netzwerkes wird der Zugriff über das Control-Gateway-Modul 22 geleitet. Mittels des Control-Gateway-Moduls 22 wird basierend auf der Zieladresse der Zugriff auf seine Kostenpflichtigkeit überprüft. Als Content Provider wird derjenige bezeichnet, der die Contents produziert oder/und im Intemet publiziert und vermarketet. Der Content wird nicht an den ISP übergeben sondern bleibt in der Autorität des Content Providers. Content Provider vermarkten und verkaufen die Leistungen, die mit dem erfindungsgemässen System abgerechnet werden. Service Provider übertragen normalerweise die Inhalte der Content Provider über ihr Netz zu den Benutzer und/oder erlauben einem Benutzer den Zugriff auf solche Inhalte. Mit dem erfindungsgemässen System und/oder Verfahren können Service Provider solche kostenpflichtige Leistungen der Contentanbieter, egal wo diese Leistung erstellt oder erbracht wird, ihren Kunden verrechnen und so ein Payment und Clearing Service erbringen. Ein Core-Engine-Modul erfasst beim Zugriff auf das Control-Gateway-Modul 22 entsprechend der vom IP-Node 20 bezogenen Leistung Call Detail Records, wobei die Call Detail Records mindestens Identität des IP-Nodes 20 und/oder Zeitdauer und/oder Anbieter der beanspruchten Leistung umfassen und an ein Billing-Modul weitergibt. Die Call Detail Records und/oder auf den Call Detail Records basierende Clearingdaten und/oder TAP-Files werden über ein Billingsystem 55 eines Service Providers oder eines Geldinstitutes verrechnet. Die Infrastruktur des erfindungsgemässen Systems besteht neben den oben beschriebenen Mittel zu Authentifizierung eines Benutzers im wesentlichen aus zwei weiteren Komponenten, die für die Installation und Integration von Bedeutung sind. Die beiden Komponenten sind das Core-Engine-Modul 59 und das bereits erwähnte Control-Gateway-Modul 22. Die Zusammenarbeit und die Aufgaben der beiden Komponenten wird im folgenden erläutert.

Das Control-Gateway-Modul 22 erkennt jeden Zugriff eines Benutzers auf Premium Content, also auf eine kostenpflichtige Leistung eines Content Providers. Das Control-Gateway-Modul 22 arbeitet wie eine Gatway oder Kontrollinstanz für den Zugriff auf den Premium Content und verweigert oder gewährt Zugriff auf die Leistungen der Content Provider. Die Web-Anfragen eines Benutzers bzw. eines IP-Nodes 20 werden hierfür an das Control-Gateway-Modul 22 geleitet, anstatt sie direkt zum Content Provider zu richten. Eingehende Anfragen werden vom Control-Gateway-Modul 22 anhand der Zieladresse (URL) auf ihre "Kostenpflichtigkeit" überprüft. Bevor der Zugriff erlaubt wird, stellt das Control-Gateway-Modul 22 die Identität des Benutzers wie oben beschreiben mittels IMSI und RADIUS-Server fest. Das Control-Gateway-Modul 22 fragt mit dieser Authentifikationsinformation beim Core-Engine-Modul 59 die weiteren Anweisung an. Die Content Provider können z.B. eine hardwaremässige und/oder Softwaremässige Logik beispielsweise mittels eines JAVA-Applets etc. in ihrer Webseite installieren, die den Zugriff eines Benutzers auf das einsprechende Control-Gateway-Modul 22 umleitet. Z.B. kann mittels eines Script-Code die richtige Route für die Benutzeranfrage von einem Netzwerkmodul abgefragt werden, womit die Anfrage über den Aufbau der HTML Seite, durch HTTP Redirects, o.ä. Methoden auf diesen Weg umgeleitet werden. Über das Control-Gateway-Modul 22 kann der User nun auf den Premium Content oder die Leistungen des Content Providers zugreifen. Das Control-Gateway-Modul 22 benötigt die Verbindung zur Core-Engine-Modul 59 um die Informationen zur Transaktion dem User darzustellen und die Zugriffe auf den Premium Content zu steuern und zu dokumentieren. Das Control-Gateway-Modul 22 kann z.B. im Netz des Service Providers installiert bzw. integriert, ähnlich wie ein Proxy Server. Das Control-Gateway-Modul 22 hält keine Kontext Informationen und kann daher einfach in Load Balancing Umgebungen eingesetzt und skaliert werden, wie z.B. DNS Robin oder Web Switches.

Das Core-Engine-Modul 59 kommuniziert mit dem Control-Gateway-Modul 22 und generiert Daten für das Billing. Jedes mal, wenn ein Benutzer über ein IP-Node 20 kostenpflichtige Leistungen beziehen will, wird die Transaktion vom Core-Engine-Modul 22 überwacht und dokumentiert. Es wird festgehalten, welcher Benutzer zu welchem Zeitpunkt welche URL mit welchem Preis anfordert und die Bezahlung bestätigt. Für die Abrechnung kann z.B. eine Preisliste vom Content Provider definiert und in einer Core-Engine Datenbank zugreifbar abgespeichert sein. Um eine Transaktion durchzuführen und einen Billing Datensatz zu generieren, muss das Core-Engine-Modul 59 den Benutzer identifizieren oder authentifizieren (siehe oben), ihm die Preisinformationen zu der angeforderten Leistung aus der Datenbank anzeigen und entsprechend der Benutzerbestätigung den Zugang zur Leistung gewähren oder sperren. Ob eine Transaktion gewährt wird kann insbesondere z.B. davon abhängig sein, welche Limits vom Service Provider und vom Benutzer selbst eingestellt worden sind, Filtereinstellungen des Benutzers, und anderen Profileinstellungen oder allgemeinen Richtlinien. Das Core-Engine-Module 59 kann z.B. als eine JAVA Applikation realisiert sein, d.h. cross-platform fähig realisiert sein, und so auf einer Vielzahl verschiedener Applikations-Server Plattformen einsetzbar sein. Als Datenbank für das Core-Engine-Modul 59 kann z.B. eine relationale Datenbank, die dem JDBC Standard entspricht, eingesetzt werden. Das Core-Engine-Modul 59 benötigt eine Schnittstelle zum oben beschriebenen Authentifikationsverfahren, um die einzelnen User zu identifizieren. Ausserdem kann das Core-Engine-Modul 59 eine Schnittstelle zum Billing System des Service Providers umfassen, um die erforderlichen Daten für die Abrechnung mit den Benutzern sicherzustellen (zum Beispiel als monatliche Summenabrechnung). Die Preisliste kann mittels eines Produkte- oder Leistungskataloges dargestellt werden, der für Premium Content eine Aufstellung der Leistungen und den zugehörigen Preisen beinhaltet. Um Premium Content zu erkennen kann das erfindungsgemässe Verfahren eine ähnliche Technologie verwenden, wie sie bei sog. Black-List Verwaltung eingesetzt wird. Das heisst, die Internetadressen (URLs) werden mittels des Core-Engine-Moduls 59 und/oder Control-Gateway-Moduls 22 ausgewertet. Content Provider definiert für bestimmte Bereiche seiner Website Preise mittels der Preisliste, die Zugang zu den Premium Contents geben. Das folgende Beispiel zeigt einige mögliche Preiseinträge:

| **URL** | **Schutz/Zeit** | **Preis** |
|---|---|---|
| http://www.somenewsprovider.com/stocks/*.html | 5 | 1 |
| http://www.somenewsprovider.com/stockarch/*.htm | 5 | 3 |
| http://www.somenewsprovider.com/archive/1440 | 1440 | 5 |

In diesem Beispiel will ein Content Provider Börseninformationen um 1 EURO pro Abruf an die Benutzer verkaufen. Für die Börsensuche im Archiv verlangt er 3 EURO und die Suche im generellen Archive soll für 24 Stunden (1440 Minuten) möglich sein und 5 EURO kosten. Entsprechend diesem Beispiel kann der Content Provider lediglich den Content auf seinem Webserver so strukturieren, dass er das entsprechende Preismodell aufstellt. Ausserdem kann der Content Provider z.B. die Zugriffsregeln so definieren, dass die Benutzer des Service Providers, direkt auf den Premium Content zugreifen können, ohne weitere Registrierung auf der Web Site. Öffentliche Inhalte können auch beim Einsatz des erfindungsgemässen Verfahrens und/oder Systems weiterhin über den öffentlichen Weg transportiert. Erst Zugriffe, die auf Premium Content erfolgen sollen werden über das System geleitet - im Speziellen ist dies das Control-Gateway-Modul 22, welches den Datentransfer autorisiert und kontrolliert. Ein flexibles Element kann z.B. auch einen zusätzlichen Authentication Agent darstellen, der mit dem Interface des Service Providers kommuniziert, um die Identifikation des Kontos hinter einer IP-Adresse zu erfragen. Der Authentication Agent könnte z.B. eine TCP Connection zum Authentication Interface herstellen, um die Anfrage zu senden. Es ist aber auch jede andere Anbindung, wie die Absicherung mittels SSL, Verwendung von Datenbankabfragen (JDBC, ODBC, native Interfaces, etc) für diesen Zweck einsetzbar. Ein solcher Authentication Agent ist jedoch basierend auf der bereits durchgeführten RADIUS-Authentifikation nicht mehr notwendig, sondern kann z.B. zur weiteren Erhöhung der Sicherheit des Systems eingesetzt werden.

Um die Hardware des Control-Gateway-Moduls 22 zu dimensionieren, kann z.B. die Anzahl der möglichen, gleichzeitigen Verbindungen von einem Router zum Control-Gateway-Moduls 22 herangezogen werden. Als Daumenregel kann z.B. angenommen werden, dass 10% der Benutzer die gleichzeitig im Intemet eingeloggt sind, gleichzeitig eine Verbindung am Control-Gateway-Moduls 22 verursachen. Die Anzahl der Netzwerkkarten kann z.B. so dimensioniert sein, dass die berechnete Anzahl gleichzeitiger Verbindungen am Control-Gateway-Moduls 22 verarbeitet werden kann. Als Richtlinie kann z.B. gelten, dass eine 100 Mbit NIC kann ungefähr 1400 HTTP Aufrufe pro Sekunde verarbeiten. Das Control-Gateway-Modul 22 kann z.B. ähnliche Charakteristika wie ein Proxy Server aufweisen: (1) Das Control-Gateway-Modul 22 arbeitet wie ein Proxy Server: für eine ankommende Verbindung (vom Browser) wird eine neue ausgehende Verbindung (zum Webserver) aufgebaut (http oder https); (2) Für eine eingehende Verbindung wird, wenn kostenpflichtig, eine ausgehende Verbindung zum Core-Engine-Modul 59 hergestellt (https). Um die Einflussfaktoren der Verbindungen untereinander möglichst auszuschliessen, kann es sinnvoll sein, für jede Richtung der Kommunikation ein eigenes Netzwerkinterface vorzusehen. Folgende Kalkulation können z.B. als Grundlage zur Ermittlung der notwendigen Hardware dienen:

| **Beschreibung** | **Kalkulation** | **Ergebniss** |
|---|---|---|
| Pro 100MBit NIC können bis zu 1.400 http Requests pro Sekunde durchgesetzt werden | | 1.400 http/sec |
| Bei Verwendung von HTTPS kann ca. ¼ von HTTP an Durchsatz erreicht werden. | 1400 / 4 | 350 https/sec |
| Der Request-Peak (Spitze an gleichzeitigen Requests pro Sekunde) beträgt ca. 20% der aktiven Benutzer | 350 * 5 | 1.750 gleichzeitige Payment Benutzer |
| Den Payment-Peak (Spitze an gleichzeitigen Benutzern, die Payment-Transaktionen anfordern) schätzen wir 1% der aktiven Benutzer-Basis | 1.750 * 100 | 175.000 gleichzeitige Internet Benutzer |

Das Control-Gateway-Modul 22 kann z.B. keine Kontext-Informationen über Benutzerverbindungen enthalten. Demzufolge ist es möglich über Standard-Lastverteil-Mechanismen die Anfragen auf mehrere Maschinen zu verteilen, wie zum Beispiel über DNS Robin und/oder Web Switches. Sollte hohe Verfügbarkeit gewünscht sein, kann es z.B. sinnvoll sein, das System mit mindestens doppelter Hardware zu kalkulieren. Die Hardware kann z.B. mit einem geeigneten Betriebssystem ausgestattet sein, wie z.B. Sun Solaris und/oder Linux / Intel und/oder FreeBSD / Intel etc.. Das Control-Gateway-Modul 22 kann funktional einem Reverse-HTTP Server entsprechen, der ähnlich wie ein Proxy Server als Gateway zwischen dem Kunden und dem Content Server positioniert wird. Die Software kann beispielsweise gemäss dem HTTP/1.1 Standard entwickelt sein und erfüllt die Anforderungen an ein Gateway gemäss RFC 2068. Das Control-Gateway-Modul 22 kann z.B. als Server-Prozess laufen, der unter User-Berechtigungen installiert und gestartet werden kann. Es kann z.B. der privilegierte Port 80 (http Standard Port) verwendet werden, jedoch kann es sinnvoll sein, den Zugriff als Port-Redirect einzurichten.

Es ist wichtig darauf hinzuweisen, dass mit dem erfindungsgemässen System Service Provider Leistungen der Contentanbieter, egal wo diese Leistung erstellt oder erbracht wird, ihren Kunden verrechnen und so ein Payment und Clearing Service erbringen können. Insbesondere wird mit dem vorliegenden System beim Billing von kostenpflichtigen Inhalten ein hoher Sicherheitsstandart sowohl für den Service Provider (ISP), den Content Provider als auch den Benutzer erreicht, wie es mit den herkömmlichen System des Standes der Technik nicht möglich ist.

## Patentansprüche

1. Computergestütztes Verfahren für content-basiertes Billing in IP-Netzwerken, wobei ein IP-Node (20) über einen Internet Service Provider auf kostenpflichtige Inhalte von einem oder mehreren Content Providern eines Netzwerkes zugreift, wobei der IP-Node (20) auf einen Request eine auf einer SIM-Karte (201) des IP-Nodes (20) gespeicherte IMSI übermittelt und wobei die übermittelte IMSI des IP-Nodes (20) in einer Datenbank eines SIM-RADIUS-Moduls (30) gespeichert wird, **dadurch gekennzeichnet,**
**dass** mittels des SIM-Radius-Moduls (30) eine Authentifizierung und/oder Service Autorisierung des IP-Nodes (20) basierend auf der IMSI der SIM-Karte (201) des IP-Nodes (20) bei einem HLR (37) und/oder VLR (37) eines GSM-Netzwerkes durchgeführt wird und an ein Control-Gateway-Modul (22) übermittelt wird,
**dass** ein Zugriff des IP-Nodes (20) auf Inhalte eines Content Providers des Netzwerkes über das Control-Gateway-Modul (22) geleitet wird, und mittels des Control-Gateway-Moduls (22) basierend auf der Zieladresse des Zugriffes auf seine Kostenpflichtigkeit überprüft wird,
**dass** ein Core-Engine-Modul (59) beim Zugriff auf das Control-Gateway-Modul (22) entsprechend der vom IP-Node (20) bezogenen Leistung Call Detail Records erfasst, wobei die Call Detail Records mindestens Identität des IP-Nodes (20) und/oder Zeitdauer und/oder Anbieter der beanspruchten Leistung erfasst und an ein Billing-Modul weitergibt, und
**dass** die Call Detail Records und/oder auf den Call Detail Records (CDR) basierende Clearingdaten und/oder TAP-Files über ein Billingsystem (55) eines Service Providers oder eines Geldinstitutes verrechnet wird.

2. Computergestütztes Verfahren nach Anspruch 1, **dadurch gekennzeichnet, dass** das Billing-Modul entsprechend der beanspruchten Leistung basierend auf den Daten des Core-Engine-Moduls Call Detail Records (CDR) und/oder TAP-Files (1014) erzeugt und diese zusammen mit Fakturierungsanweisungen (1013) an ein Clearing-Modul (1004) übermittelt, wobei das Clearing-Modul (1004) die beanspruchte Leistung des Benutzers (1008) einem Anbieter (1008) eines Festnetzes (1007) verrechnet (1016) und/oder die Call Detail Records (CDR) und/oder TAP-Files (1017) zur Verrechnung an einen GSM (1005) Dienstanbieter (1006) und/oder Internet Service Provider (ISP) übermittelt.

3. Computergestütztes Verfahren nach Anspruch 2, **dadurch gekennzeichnet, dass** die Fakturierungsanweisungen (1013) mindestens benutzerspezifische und/oder dienstanbieterspezifische Verrechnungsdaten umfassen.

4. Computergestütztes Verfahren nach einem der Ansprüche 1 bis 3, **dadurch gekennzeichnet, dass** als IP-Node ein mobiler IP-Node in heterogenen WLANs verwendet wird, wobei der mobile IP-Node (20) über eine drahtlose Schnittstelle innerhalb einer Basic Service Area eines WLANs auf einen Access Point eines WLAN zugreift, wobei die Basic Service Area des WLAN ein oder mehrere einem Access Server zugeordnete Access Points umfasst, und wobei der Access Server das Control-Gateway-Modul umfasst und/oder entsprechende Daten an das Control-Gateway-Modul übermittelt.

5. Computergestütztes Verfahren nach Anspruch 4, **dadurch gekennzeichnet, dass** mittels einer SIM-Benutzerdatenbank (34) und einem SIM-Gateway-Modul (32) der logische IP-Datenkanal des IP-Node (20) zu entsprechenden GSM-Daten für Signal- und Datenkanäle eines GSM-Netzwerkes benutzerspezifisch ergänzt wird.

6. Computergestütztes Verfahren nach einem der Ansprüche 1 bis 5, **dadurch gekennzeichnet, dass** ein erster Call Detail Record mindestens basierend auf der IP-Adresse des IP-Nodes (20) und Identifikationen der Dienstanbieter, deren Leistung vom IP- Node beansprucht wurde, erstellt wird.

7. Computergestütztes Verfahren nach einem der Ansprüche 1 bis 6, **dadurch gekennzeichnet, dass** die TAP-Files (1014) mindestens basierend auf Roaming Broker Tariffs sowie Public Mobile Network CDRITAP Identification Codes erstellt werden.

8. Computergestütztes Verfahren nach einem der Ansprüche 1 bis 7, **dadurch gekennzeichnet, dass** eine Billing-Management-Datenbank IP-Adressen und/oder GSM-Identitifizierung der Benutzer und/oder Dienstanbieter umfasst.

9. Computergestütztes Verfahren nach einem der Ansprüche 1 bis 8, **dadurch gekennzeichnet, dass** die Billing-Management-Datenbank Roaming-Broker Tariffs sowie Public Mobile Network TAP Identification Codes umfasst.

10. System für content-basiertes Billing in IP-Netzwerken, welches System mindestens ein IP-Node (20) mit einer Schnittstelle zu einem Intemet Service Providers und ein oder mehrere Content Provider umfasst, wobei die Content Provider über ein Netzwerk zugreifbare Datenbanken mit kostenpflichtigen Inhalten umfassen, und welcher IP-Node eine SIM-Karte (201) zum Speichern einer IMSI umfasst, **dadurch gekennzeichnet,**
**dass** das SIM-Radius-Moduls (30) Mittel zur Authentifizierung und/oder Service Autorisierung des IP-Nodes (20), basierend auf der IMSI der SIM-Karte (201) des mobilen Nodes (20) bei einem HLR (37) und/oder VLR (37) eines GSM-Netzwerkes umfasst,
**dass** ein Zugriff des IP-Nodes (20) auf Inhalte eines Content Providers des Netzwerkes über ein Control-Gateway-Modul umleitbar ist, und mittels des Control-Gateway-Moduls (22) basierend auf der Zieladresse des Zugriffes auf seine Kostenpflichtigkeit überprüfbar ist,
**dass** ein Core-Engine-Modul (59) Mittel zum Erfassen eines Zugriffes auf das Control-Gateway-Modul (59) entsprechend der vom IP-Node bezogenen Leistung Call Detail Records umfasst, wobei die Call Detail Records mindestens Identität des IP-Nodes und/oder Zeitdauer und/oder Anbieter der beanspruchten Leistung erfasst und an ein Billing-Modul weitergibt, und
**dass** die Call Detail Records und/oder auf den Call Detail Records basierende Clearingdaten und/oder auf den Call Detail Records basierende TAP-Files über ein Billingsystem eines Service Providers oder eines Geldinstitutes verrechenbar sind.

11. System nach Anspruch 10, **dadurch gekennzeichnet, dass** das Billing-Modul Mittel zum Erzeugen von TAP-Files (1014) basierend auf der beanspruchten Leistung mittels der Daten des Core-Engine-Modul umfasst, wobei die TAP-Files zusammen mit Fakturierungsanweisungen an ein Clearing-Modul übermittelbar sind und wobei mittels des Clearing-Modul (1004) die beanspruchte Leistung des Benutzers (1008) einem Anbieter (1008) eines Festnetzes (1007) verrechenbar sind (1016) und/oder die TAP-Files (1017) zur Verrechnung an einen GSM (1005) Dienstanbieter (1006) und/oder Internet Service Provider (ISP) übermittelbar sind.

12. System nach Anspruch 11, **dadurch gekennzeichnet, dass** die Fakturierungsanweisungen mindestens benutzerspezifische und/oder dienstanbieterspezifische Verrechnungsdaten umfassen.

13. System nach einem der Ansprüche 1 bis 12, **dadurch gekennzeichnet, dass** der IP-Node ein mobiler IP-Node in heterogenen WLANs ist, wobei der mobile IP-Node (20) eine drahtlose Schnittstelle für den Zugriff auf einen Access Point innerhalb einer Basic Service Area eines WLANs umfasst, wobei die Basic Service Area des WLAN ein oder mehrere einem Access Server zugeordnete Access Points umfasst, und wobei der Access Server das Control-Gateway-Modul umfasst oder wobei das Control-Gateway-Modul (22) als vorgesetztes System insbesondere bei einem Wireless Access Internet Node System implementiert ist.

14. System nach Anspruch 13, **dadurch gekennzeichnet, dass** mittels einer SIM-Benutzerdatenbank (34) und einem SIM-Gateway-Modul (32) der logische IP-Datenkanal des WLAN zu entsprechenden GSM-Daten für Signal- und Datenkanäle eines GSM-Netzwerkes benutzerspezifisch ergänzbar ist.

15. System nach Anspruch 14, **dadurch gekennzeichnet, dass** mittels einer SIM-Benutzerdatenbank (34) und einem SIM-Gateway-Modul (32) Call Detail Records mindestens basierend auf der IP-Adresse des IP-Nodes (20) und Identifikationen der Dienstanbieter, deren Leistung vom IP-Node beansprucht wurde, erstellbar sind.

16. System nach einem der Ansprüche 11 bis 15, **dadurch gekennzeichnet, dass** die TAP-Files (1014) mindestens Informationen bezüglich Roaming Broker Tariffs sowie Public Mobile Network TAP Identification Codes umfassen.

17. System nach einem der Ansprüche 10 bis 16, **dadurch gekennzeichnet, dass** eine Billing-Management-Datenbank (1032) IP-Adressen und/oder GSM-Identitifizierung der Benutzer und/oder Dienstanbieter umfasst.

18. System nach einem der Ansprüche 10 bis 17, **dadurch gekennzeichnet, dass** die Billing-Management-Datenbank (1032) Roaming Broker Tariffs sowie Public Mobile Network TAP Identification Codes umfasst.

## Claims

1. Computer-aided method for content-based billing in IP networks, an IP node (20) accessing chargeable contents of one or more content providers of a network via an internet service provider, the IP node (20) communicating, at a request, an IMSI stored on an SIM card (201) of the IP node (20) and the communicated IMSI of the IP node (20) being stored in a database of an SIM RADIUS module (30), **characterized**
**in that**, by means of the SIM Radius module (30), an authentification and/or service authorisation of the IP node (20) on the basis of the IMSI of the SIM card (201) of the IP node (20) is carried out at an HLR (37) and/or VLR (37) of a GSM network and is communicated to a control gateway module (22),
**in that** access of the IP node (20) to contents of a content provider of the network is controlled via the control gateway module (22) and checked for its liability to charges by means of the control gateway module (22) on the basis of the target address of the access,
**in that**, during access to the control gateway module (22), a core engine module (59), acquires call detail records according to the performance procured from the IP node (20), the call detail records comprising at least the identity of the IP node (20) and/or duration and/or provider of the performance taken up and said call detail records being transmitted to a billing module, and
**in that** the call detail records and/or clearing data based on the call detail records (CDR) and/or TAP files are settled via a billing system (55) of a service provider or of a financial institution.

2. Computer-aided method according to Claim 1, **characterized in that** the billing module generates call detail records (CDR) and/or TAP files (1014) according to the performance taken up on the basis of the data of the core engine module and communicates them together with billing instructions (1013) to a clearing module (1004), the clearing module (1004) charging (1016) the performance taken up by the user (1008) to a provider (1008) of a fixed network (1007) and/or the call detail records (CDR) and/or TAP files (1017) being communicated to a GSM (1005) service provider (1006) and/or internet service provider (ISP) for settlement.

3. Computer-aided method according to Claim 2, **characterized in that** the billing instructions (1013) comprise at least user-specific and/or service provider-specific clearing data.

4. Computer-aided method according to any of Claims 1 to 3, **characterized in that** the IP node used is a mobile IP node in heterogeneous WLANs, the mobile IP node (20) accessing an access point of a WLAN via a wireless interface within a basic service area of a WLAN, the basic service area of the WLAN comprising one or more access points coordinated with an access server, and the access server comprising a control gateway module and/or communicating corresponding data to the control gateway module.

5. Computer-aided method according to Claim 4, **characterized in that** the logical IP data channel of the IP node (20) is supplemented in a user-specific manner for corresponding GSM data for signal and data channels of a GSM network by means of an SIM user database (34) and an SIM gateway module (32).

6. Computer-aided method according to any of Claims 1 to 5, **characterized in that** a first call detail record is created at least on the basis of the IP address of the IP node (20) and identifications of the service providers whose performance was taken up by the IP node.

7. Computer-aided method according to any of Claims 1 to 6, **characterized in that** the TAP files (1014) are created at least on the basis of roaming broker tariffs and public mobile networks CDR/TAP identification codes.

8. Computer-aided method according to any of Claims 1 to 7, **characterized in that** a billing management database comprises IP addresses and/or GSM identification of the users and/or service providers.

9. Computer-aided method according any of Claims 1 to 8, **characterized in that** the billing management database comprises roaming broker tariffs and public mobile network TAP identification codes.

10. System for content-based billing in IP networks, which system comprises at least one IP node (20) having an interface to an internet service provider and one or more content providers, the content providers comprising databases accessible via a network and having chargeable contents, and which IP node comprises an SIM card (201) for storing an IMSI, **characterized**
**in that** the SIM Radius module (30) comprises a means for authentification and/or service authorisation of the IP node (20), based on the IMSI of the SIM card (201) of the mobile node (20) at an HLR (37) and/or VLR (37) of a GSM network,
**in that** access of the IP node (20) to contents of a content provider of the network can be rerouted via a control gateway module and can be checked for its chargeability by means of the control gateway module (22) on the basis of the target address of the access,
**in that** a core engine module (59) comprises call detail records as means for registering an access to the control gateway module (22) according to the performance taken up by the IP node, the call detail records comprising at least the identity of the IP node and/or duration and/or provider of the performance taken up and said call detail records being transmitted to a billing module, and
**in that** the call detail records and/or clearing data based on the call detail records and/or TAP files based on the call detail records can be settled via a billing system of a service provider or of a financial institution.

11. System according to Claim 10, **characterized in that** the billing module comprises a means for generating TAP files (1014) on the basis of the performance taken up by means of the data of the core engine module, the TAP files being capable of being communicated together with billing instructions to a clearing module, and the performance taken up by the user (1008) being capable of being charged (1016) to a provider (1008) of a fixed network (1007) by means of the clearing module (1004) and/or the TAP files (1017) being capable of being communicated to a GSM (1005) service provider (1006) and/or internet service provider (ISP) for settlement.

12. System according to Claim 11, **characterized in that** the billing instructions comprise at least user-specific and/or service provider-specific clearing data.

13. System according to any of Claims 1 to 12, **characterized in that** the IP node is a mobile IP node in heterogeneous WLANs, the mobile IP node (20) comprising a wireless interface for access to an access point within a basic service area of a WLAN, the basic service area of the WLAN comprising one or more access points coordinated with an access server, and the access server comprising the control gateway module or the control gateway module (22) being implemented as a superior system, in particular in the case of a wireless access internet node system.

14. System according to Claim 13, **characterized in that** the logical IP data channel of the WLAN can be supplemented in a user-specific manner for corresponding GSM data for signal and data channels of a GSM network by means of an SIM user database (34) and an SIM gateway module (32).

15. System according to Claim 14, **characterized in that** call detail records can be created at least on the basis of the IP address of the IP node (20) and identifications of the service providers whose performance was taken up by the IP node by means of an SIM user database (34) and an SIM gateway module (32).

16. System according to any of Claims 11 to 15, **characterized in that** the TAP files (1014) comprise at least information relating to roaming broker tariffs and public mobile network TAP identification codes.

17. System according to any of Claims 10 to 16, **characterized in that** a billing management database (1032) comprises IP addresses and/or GSM identification of the users and/or service providers.

18. System according to any of Claims 10 to 17, **characterized in that** the billing management database (1032) comprises roaming broker tariffs and public mobile network TAP identification codes.

## Revendications

1. Procédé assisté par ordinateur pour la facturation sur la base du contenu dans des réseaux IP, où un noeud IP (20) accède via un fournisseur de services Internet à des contenus payants d'un ou plusieurs fournisseurs de contenu d'un réseau, où le noeud IP (20) transmet sur demande un IMSI qui est sauvegardé sur une carte SIM (201) du noeud IP (20) et où l'IMSI transmis du noeud IP (20) est sauvegardé dans une base de données d'un module SIM-RADIUS (30), **caractérisé**
**en ce qu'**au moyen du module SIM-Radius (30), une authentification et /ou une autorisation de service du noeud IP (20) basée sur l'IMSI de la carte SIM (201) du noeud IP (20) est réalisée dans un HLR (37) et/ou un VLR (37) d'un réseau GSM et est transmise à un module Control Gateway (22),
**en ce qu'**un accès du noeud IP (20) sur les contenus d'un fournisseur de contenus du réseau est dirigé à travers le module Control Gateway (22) et vérifié par rapport à l'obligation de paiement au moyen du module Control Gateway (22), basé sur l'adresse de destination de l'accès,
**en ce qu'**un module Core Engine (59) enregistre des Call Detail Records en fonction de la prestation reçue par le noeud IP (20) lors de l'accès sur le module Control Gateway (22), où les Call Detail Records enregistrent au moins l'identité du noeud IP (20) et/ou la durée de temps et /ou le fournisseur de la prestation sollicitée et le transmettent à un module de facturation, et
**en ce que** les Call Detail Records et/ou les données de Clearing basées sur les Call Detail Records (CDR) et / ou les fichiers TAP sont facturés à travers un système de facturation (55) d'un fournisseur de services ou d'un établissement financier.

2. Procédé assisté par ordinateur selon la revendication 1, **caractérisé en ce que** le module de facturation génère des Call Detail Records (CDR) et/ou des fichiers TAP (1014) en fonction de la prestation sollicitée, basés sur les données du module Core Engine et transmet ceux-ci ensemble avec les instructions de facturation (1013) à un module de Clearing (1004), où le module de Clearing (1004) facture (1016) la prestation sollicitée de l'utilisateur (1008) à un fournisseur (1008) de réseau fixe (1007) et/ou transmet les Call Detail Records (CDR) et/ou les fichiers TAP (1017) à un fournisseur de services (1006) GSM (1005) et/ou un fournisseur de services Internet (ISP) pour la facturation.

3. Procédé assisté par ordinateur selon la revendication 2, **caractérisé en ce que** les instructions de facturation (1013) comprennent au moins des données de facturation spécifiques à l'utilisateur et/ou spécifiques au fournisseur de services.

4. Procédé assisté par ordinateur selon l'une quelconque des revendications 1 à 3, **caractérisé en ce qu'**un noeud IP mobile dans des WLANs hétérogènes est utilisé en tant que noeud IP, où ledit noeud IP mobile (20) accède à un point d'accès d'un WLAN par une interface sans fil à l'intérieur d'une Basic Service Area d'un WLAN, où ladite Basic Service Area du WLAN comprend un ou plusieurs points d'accès affectés à un serveur d'accès, et où le serveur d'accès comprend le module Control Gateway et/ou transmet des données correspondantes au module Control Gateway.

5. Procédé assisté par ordinateur selon la revendication 4, **caractérisé en ce qu'**au moyen d'une base de données d'utilisateurs SIM (34) et d'un module SIM-Gateway (32), le canal de données IP logique du noeud IP (20) est complété, de manière spécifique à l'utilisateur, en des données GSM correspondantes pour les canaux de signaux et de données d'un réseau GSM.

6. Procédé assisté par ordinateur selon l'une quelconque des revendications 1 à 5, **caractérisé en ce qu'**un premier Call Detail Record est constitué, se basant au moins sur l'adresse IP du noeud IP (20) et les identifications des fournisseurs de services, desquels la prestation était sollicitée par le noeud IP.

7. Procédé assisté par ordinateur selon l'une quelconque des revendications 1 à 6, **caractérisé en ce que** les fichiers TAP (1014) sont générés en se basant au moins sur les Roaming Broker Tariffs ainsi que les Public Mobile Network CDR/TAP Identification Codes.

8. Procédé assisté par ordinateur selon l'une quelconque des revendications 1 à 7, **caractérisé en ce que** la base de données de gestion de la facturation comprend des adresses IP et/ou l'identification GSM des utilisateurs et/ou des fournisseurs de services.

9. Procédé assisté par ordinateur selon l'une quelconque des revendications 1 à 8, **caractérisé en ce que** la base de données de gestion de la facturation comprend des Roaming Broker Tariffs ainsi que des Public Mobile Network TAP Identification Codes.

10. Système pour une facturation sur la base du contenu dans des réseaux IP, où le système comprend au moins un noeud IP (20) avec une interface vers un fournisseur de services Internet et un ou plusieurs fournisseurs de contenu, où les fournisseurs de contenu comprennent des bases de données avec des contenus payants qui sont accessibles à travers un réseau et où le noeud IP comprend une carte SIM (201) pour la sauvegarde d'un IMSI, **caractérisé**
**en ce que** le module SIM-Radius (30) comprend des moyens pour l'authentification et/ou l'autorisation de service du noeud IP (20), basée sur l'IMSI de la carte SIM (201) du noeud mobile (20) dans un HLR (37) et/ou un VLR (37) d'un réseau GSM,
**en ce qu'**un accès du noeud IP (20) sur les contenus d'un fournisseur de contenu du réseau peuvent être déviés à travers un module Control Gateway et vérifiés par rapport à l'obligation de paiement au moyen du module Control Gateway (22), basé sur l'adresse de destination de l'accès,
**en ce qu'**un module Core Engine (59) comprend des moyens pour enregistrer l'accès sur le module Control Gateway (22) en fonction de la prestation reçue par le noeud IP (20) des Call Detail Records, où les Call Detail Records enregistrent au moins l'identité du noeud IP et /ou la durée de temps et /ou le fournisseur de la prestation sollicitée et le transmettent à un module de facturation, et
**en ce que** les Call Detail Records et/ou les données de Clearing basées sur les Call Detail Records (CDR) et/ou les fichiers TAP basés sur les Call Detail Records peuvent être facturés à travers un système de facturation d'un fournisseur de services ou d'un établissement financier.

11. Système selon la revendication 10, **caractérisé en ce que** le module de facturation comprend des moyens pour générer des fichiers TAP (1014) basés sur la prestation sollicitée au moyen des données du module Core Engine, où ces fichiers TAP peuvent être transmis ensemble avec des instructions de facturation à un module de Clearing et où au moyen du module de Clearing (1004) la prestation sollicitée de l'utilisateur (1008) peut être facturée (1016) à un fournisseur (1008) d'un réseau fixe (1007) et /ou les fichiers TAP (1017) peuvent être transmis à un fournisseur de services (1006) GSM (1005) ou à un fournisseur de services Internet (ISP) pour la facturation.

12. Système selon la revendication 11, **caractérisé en ce que** les instructions de facturation comprennent au moins des données de facturation spécifiques à l'utilisateur et/ou spécifiques au fournisseur de services.

13. Système selon l'une quelconque des revendications 1 à 12, **caractérisé en ce que** le noeud IP est un noeud IP mobile dans des WLANs hétérogènes, où ledit noeud IP mobile (20) comprend une interface sans fil pour un accès à un point d'accès à l'intérieur d'une Basic Service Area d'un WLAN, où ladite Basic Service Area du WLAN comprend un ou plusieurs points d'accès affectés à un serveur d'accès, et où le serveur d'accès comprend le module Control Gateway ou dans lequel le module Control Gateway (22) est implémenté en tant que système avancé, en particulier dans un système de noeud d'accès sans fil à Internet.

14. Système selon la revendication 13, **caractérisé en ce qu'**au moyen d'une base de données d'utilisateurs SIM (34) et d'un module SIM-Gateway (32), le canal de données IP logique du WLAN peut être complété, de manière spécifique à l'utilisateur, en des données GSM correspondantes pour les canaux de signaux et de données d'un réseau GSM.

15. Système selon la revendication 14, **caractérisé en ce qu'**au moyen d'une base de données d'utilisateurs SIM (34) et d'un module SIM-Gateway (32), des Call Detail Records peuvent être constitués, se basant au moins sur l'adresse IP du noeud IP (20) et les identifications des fournisseurs de services, desquels la prestation était sollicitée par le noeud IP.

16. Système selon l'une quelconque des revendications 11 à 15, **caractérisé en ce que** que les fichiers TAP (1014) comprennent au moins des informations sur les Roaming Broker Tariffs ainsi que les Public Mobile Network TAP Identification Codes.

17. Système selon l'une quelconque des revendications 10 à 16, **caractérisé en ce que** la base de données de gestion de la facturation (1032) comprend des adresses IP et/ou l'identification GSM des utilisateurs et/ou des fournisseurs de services.

18. Système selon l'une quelconque des revendications 10 à 17, **caractérisé en ce que** la base de données de gestion de la facturation (1032) comprend des Roaming Broker Tariffs ainsi que des Public Mobile Network TAP Identification Codes.
